(19) Europäisches Patentamt
European Patent Office
Office européen des brevets

(11) **EP 4 425 361 A1**

(12) **EUROPEAN PATENT APPLICATION**

(43) Date of publication:
**04.09.2024 Bulletin 2024/36**

(21) Application number: **24160351.3**

(22) Date of filing: **28.02.2024**

(51) International Patent Classification (IPC):
**G06F 21/62** (2013.01)   **G06F 16/901** (2019.01)
**G06F 16/21** (2019.01)   **G06N 5/022** (2023.01)

(52) Cooperative Patent Classification (CPC):
**G06F 21/62; G06F 16/9024; G06F 21/6218;
G06N 5/022**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **28.02.2023 US 202363448722 P
28.02.2023 US 202363448724 P
28.02.2023 US 202363448738 P
01.03.2023 US 202363449241 P
27.02.2024 US 202418589035**

(71) Applicant: **Infosys Limited
560-100 Bangalore (IN)**

(72) Inventor: **SCHILDERS, Steven
Columbus, 47203 (US)**

(74) Representative: **Savi, Massimiliano et al
Notarbartolo & Gervasi S.p.A.
Viale Achille Papa, 30
20149 Milano (IT)**

(54) **SYSTEMS AND METHODS FOR HYPERGRAPH BASED  INFERENCE ENGINES**

(57)    An executable inference hypergraph representing a rule-based model, the executable inference hypergraph comprising a first hyperedge associated with a first inference rule of the rule-based model and encapsulating a plurality of value nodes storing a plurality of values such that the plurality of values form a part of a set of terms used to evaluate the first inference rule, wherein the plurality of value nodes include at least one of the one or more value nodes of a graph-based model. The executable inference hypergraph further comprising a rule overlay node coupled to the first hyperedge thereby forming a first executable inference rule, wherein the rule overlay node comprises processing logic operable to evaluate the first inference rule using the set of terms encapsulated by the first hyperedge. The executable inference hypergraph is executed to determine an inference outcome.

FIGURE 2

## Description

## RELATED APPLICATIONS

The present application claims priority to U.S. Provisional Patent Application Serial Nos. 63,449/241, filed March 1, 2023; 63/448,724, filed February 28, 2023; 63/448,722, filed February 28, 2023; and 63/448,738, filed February 28, 2023, all of which are incorporated herein by reference in their entirety.

## TECHNICAL FIELD

The present disclosure relates to executable graph-based models. Particularly, but not exclusively, the present disclosure relates to the incorporation of inference engines within executable graph-based models.

## BACKGROUND

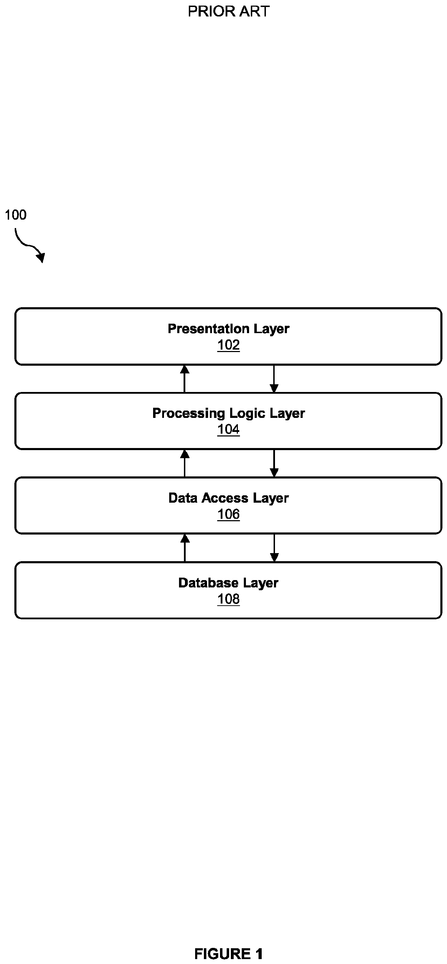

Modern system designs typically separate data storage from any functional data structure used from a processing logic perspective. This separation often occurs when data is "at rest" or at runtime where the processing system interacts with a copy of the relevant data in the processing space that can be of a different representation. This separation also leads to an impedance mismatch which requires some form of a data management solution to perform the necessary mappings between the two states. As a result of this separation of concerns, the processing logic is typically performed in a separate technology and physical tier (in an *n*-tier architecture) from the data. This is illustrated in the example *n*-tier architecture shown in Figure 1.

The example *n*-tier architecture 100 comprises a presentation layer 102, a processing logic layer 104, a data access layer 106, and a database layer 108. The presentation layer 102 comprises applications or components which are used to display the outputs of the processing logic layer 104 to a user or users. The processing logic layer 104 comprises applications, components, or services which perform some form of processing on the data obtained from the data access layer 106. The data access layer 106 comprises the applications, components, and/or services which can access the data used by the processing logic layer 104 and stored at the database layer 108. The database layer 108 handles the persistent storage of the data used by the system (e.g., in the form of a relational database, flat file, NoSQL database, graph database, and the like).

The layers of the example *n*-tier architecture 100 are technically separated. Each layer may utilize a separate set of components to perform specific functionality (e.g., a database management system is used in the database layer 108 whilst an enterprise application is used in the processing logic layer 104). The layers of the *n*-tier architecture 100 may also be physically separated. For example, the database layer 108 may execute on a remote cloud service, the processing logic layer 104 may execute on a network within an enterprise, and the presentation layer 102 may execute on a user device within the enterprise. While some architectural designs require a clear separation of concerns between data and the use of the data, often the separation enforced by architectures such as that illustrated in Figure 1 can severely inhibit the flexibility, extensibility, and responsiveness of any system created.

Therefore, there is a need for enhanced architectures which provide improved flexibility, extensibility, and responsiveness thereby providing more efficient data processing systems.

## SUMMARY OF DISCLOSURE

According to an embodiment of the present disclosure, there is provided a system comprising a memory storing a graph-based model comprising one or more value nodes storing one or more values and an executable inference hypergraph representing a rule-based model. The executable inference hypergraph comprises a first hyperedge associated with a first inference rule of the rule-based model and encapsulating a plurality of value nodes storing a plurality of values such that the plurality of values form a part of a set of terms used to evaluate the first inference rule, wherein the plurality of value nodes include at least one of the one or more value nodes of the graph-based model; and a rule overlay node coupled to the first hyperedge thereby forming a first executable inference rule, wherein the rule overlay node comprises processing logic operable to evaluate the first inference rule using the set of terms encapsulated by the first hyperedge. The system further comprises processing circuitry coupled to the memory and configured to receive a trigger related to a request to perform an inference using the executable inference hypergraph and in response to the trigger being received, execute the executable inference hypergraph to determine an inference outcome, wherein execution of the executable inference hypergraph includes an execution of the first executable inference rule to evaluate the first inference rule using the set of terms encapsulated by the first hyperedge.

According to a further embodiment of the present disclosure, there is provided a method comprising identifying, using processing circuitry, a graph-based model comprising one or more value nodes storing one or more values, identifying, using the processing circuitry, an executable inference hypergraph representing a rule-based model, wherein the executable inference hypergraph comprises a first hyperedge associated with a first inference rule of the rule-based model and encapsulating a plurality of value nodes storing a plurality of values such that the plurality of values form a part of a set of terms used to evaluate the first inference rule, wherein the plurality of value nodes include at least one of the one or more value nodes of the graph-based model, and a rule overlay node coupled to the first hyperedge thereby forming a first executable inference rule, wherein the rule overlay node comprises processing logic operable to evaluate the first inference rule using the set of terms encapsulated by the first hyperedge, receiving, by the processing circuitry, a trigger related to a request to perform an inference using the executable inference hypergraph, and in response to the trigger being received, executing, by the processing circuitry, the executable inference hypergraph to determine an inference outcome, wherein execution of the executable inference hypergraph includes an execution of the first executable inference rule to evaluate the first inference rule using the set of terms encapsulated by the first hyperedge.

According to an additional embodiment of the present disclosure, there is provided a non-transitory computer readable medium including instructions which, when executed by processing circuitry, cause the processing circuitry to identify a graph-based model comprising one or more value nodes storing one or more values; identify an executable inference hypergraph representing a rule-based model, wherein the executable inference hypergraph comprises a first hyperedge associated with a first inference rule of the rule-based model and encapsulating a plurality of value nodes storing a plurality of values such that the plurality of values form a part of a set of terms used to evaluate the first inference rule, wherein the plurality of value nodes include at least one of the one or more value nodes of the graph-based model, and a rule overlay node coupled to the first hyperedge thereby forming a first executable inference rule, wherein the rule overlay node comprises processing logic operable to evaluate the first inference rule using the set of terms encapsulated by the first hyperedge; receive a trigger related to a request to perform an inference using the executable inference hypergraph; and in response to the trigger being received, execute the executable inference hypergraph to determine an inference outcome, wherein execution of the executable inference hypergraph includes an execution of the first executable inference rule to evaluate the first inference rule using the set of terms encapsulated by the first hyperedge.

Further embodiments and embodiments of the present disclosure are set out in the appended claims. Advantages will become more apparent to those of ordinary skill in the art from the following description of the preferred embodiments which have been shown and described by way of illustration. As will be realized, the present embodiments may be capable of other and different embodiments, and their details are capable of modification in various respects. Accordingly, the drawings and description are to be regarded as illustrative in nature and not as restrictive.

**BRIEF DESCRIPTION OF FIGURES**

Embodiments of the present disclosure will now be described, by way of example only, and with reference to the accompanying drawings, in which:

Figure 1 shows a prior-art n-tier architecture;

Figure 2 shows an executable graph-based model according to an embodiment of the present disclosure;

Figure 3 shows a system for executable graph-based models according to an embodiment of the present disclosure;

Figure 4A shows the general structure of a node within an executable graph-based model according to an embodiment of the present disclosure;

Figure 4B shows an executable node according to an embodiment of the present disclosure;

Figure 4C shows the structure of a contract node according to an embodiment of the present disclosure;

Figure 5A shows the general structure of a runtime node according to an embodiment of the present disclosure;

Figure 5B shows an executable node template and an executable node instance according to an embodiment of the present disclosure;

Figure 5C shows an executable runtime node according to an embodiment of the present disclosure;

Figure 5D shows the executable runtime node of Figure 4C but with one or more executable nodes within the base runtime node according to an embodiment of the present disclosure;

Figure 6 illustrates the concept of a hyperedge according to an embodiment of the present disclosure;

Figures 7A-7D show portions of an executable inference hypergraph representing a rule-based model according to embodiments of the present disclosure;

Figures 8A and 8B show an example executable graph-based model comprising an inference hypergraph according to an embodiment of the present disclosure;

Figure 9 shows a method according to an embodiment of the present disclosure; and

Figure 10 shows an example computing system for carrying out the methods of the present disclosure.

**DETAILED DESCRIPTION**

Existing architectures, such as that described in relation to Figure 1 above, maintain a forced technical, and sometimes physical, separation between the processing logic and the data. As previously stated, the technical and physical separation of data and processing logic can be inhibitive to the types of architectural systems that can be created. Furthermore, the complexity of *n*-tier architectures, and their strict separation of functionality (layers), can severely impact system real-time processing performance. This, in turn, leads to processing delays or latency which reduces the applicability of such architectures being used in time-critical application settings such as medical devices, autonomous vehicles, and real-time control systems. In addition, the central storage of all data within a single database or database layer (e.g., the database layer 108 show in Figure 1) restricts the ways in which a user may access, maintain, and manage their personal data stored by an enterprise within the single database or database layer.

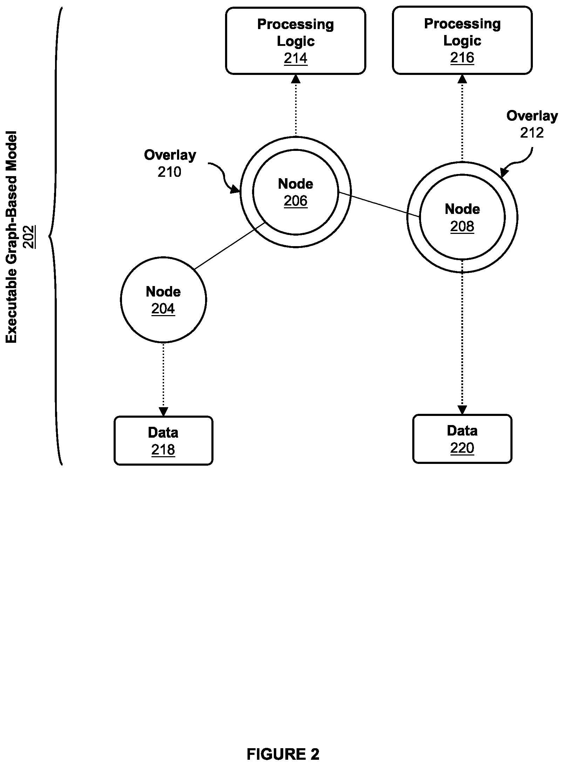

Executable graph-based models dynamically combine data and data processing functionality at runtime whilst their separability may be maintained when at rest. This is illustrated in Figure 2.

Figure 2 illustrates an executable graph-based model 202 according to an embodiment of the present disclosure.

The executable graph-based model 202 is generally formed of a data structure (i.e., a graph-based model, or graphical model) comprising a plurality of nodes 204-208. The executable graph-based model 202 enables the plurality of nodes 204-208 to be functionally extended with processing logic via the use of overlays 210, 212. Each overlay comprises processing logic, such as processing logic 214 and 216 which are associated with the overlays 210 and 212 respectively. At run-time, data such as the data 218 and the data 220 are associated with nodes within the executable graph-based model 202 and the overlays 210 and 212 provide the functionality to respond to stimuli an interact with, manipulate, or otherwise process the data. As such, the data processing functionality is separate from the data itself when offline (i.e., when persisted to storage) and is combined dynamically with the data at run-time.

As such, the executable graph-based model 202 maintains separability of the data and the data processing logic when offline thereby allowing the user to maintain control over their data. Moreover, by integrating the data and the data processing logic within a single model, processing delays or latency are reduced because the data and the processing logic exist within the same logical system. Therefore, the executable graph-based model 202 is applicable to a range of time-critical systems where efficient processing of stimuli is required.

The present disclosure is directed to the extension of executable graph-based models to incorporate the functionality of inference engines such as rule-based systems. In particular, the present disclosure describes an inference overlay structure which is composed to form an overlay inference hypergraph which may form a part of an executable graph-based model. Hypergraphs as are known in the art extend the concept of a graph to allow an edge to connect any number of nodes or vertices. According to the present disclosure, a hypergraph implemented as part of an executable graph-based model extends the concept of a hypergraph as known in the art to incorporate processing functionality as part of the hypergraph (through the use of overlays). This processing functionality may be used to perform inferences from the data held within the executable graph-based model (i.e., predictions based on the structure of, and data within, the hypergraph). Advantageously, an overlay inference hypergraph allows for the inference engine, along with additional processing logic and functionality contained in overlay nodes, to be integrated and executed in situ with the data model thereby providing an efficient, configurable, and flexible system.

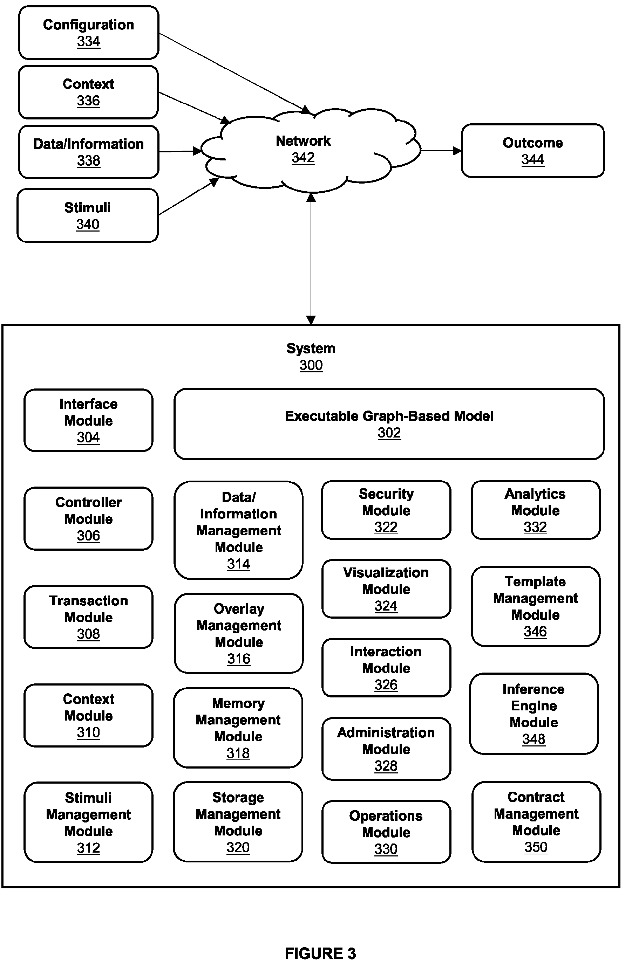

Figure 3 shows a system 300 for execution, management, and configuration of executable graph-based models according to an embodiment of the present disclosure.

The system 300 comprises an executable graph-based model 302 similar to the executable graph-based model 202 described in brief above in relation to Figure 2. The system 300 further comprises an interface module 304, a controller module 306, a transaction module 308, a context module 310, a stimuli management module 312, a data management module 314, an overlay management module 316, a memory management module 318, a storage management module 320, a security module 322, a visualization module 324, an interaction module 326, an administration module 328, an operations module 330, and an analytics module 332. Figure 3 further shows a configuration 334, a context 336, data 338, stimuli 340, a network 342, and an outcome 344. The system 300 further comprises a template management module 346, an inference engine module 348, and a contract management module 350. The interface module 304, the controller module 306, the transaction module 308, the context module 310, the stimuli management module 312, the data management module 314, the overlay management module 316, the memory management module 318, the storage management module 320, the security module 322, the visualization module 324, the interaction module 326, the administration module 328, the operations module 330, the analytics module 332, the template management module 346, the inference engine module 348, and the contract management module 350 may be collectively referred to as "a plurality of modules".

The skilled person will appreciate that the present description of the system 300 is not intended to be limiting, and the system 300 can include, or interface with, further modules not expressly described herein. Moreover, the functionality of two or more modules of the plurality of modules can be combined within a single module. For example, the functionalities of the memory management module 318, the storage management module 320, and the security module 322 may be combined within a single module. Conversely, the functionality of a single module can be split into two or more further modules which can be executed on two or more devices. The modules described below in relation to the system 300 can operate in a parallel, distributed, or networked fashion. The system 300 can be implemented in software, hardware, or a combination of both software and hardware. Examples of suitable hardware modules include, a general-purpose processor, a field programmable gate array (FPGA), and/or an application specific integrated circuit (ASIC). Software modules can be expressed in a variety of software languages such as C, C++, Java, Ruby, Visual Basic, Python, and/or other object-oriented, procedural, or other programming language.

The executable graph-based model 302 corresponds to the application-specific combination of data and data processing logic which is manipulated, processed, and/or otherwise handled by the other modules within the system 300. As stated above, the structure and functionality of the data processing logic (e.g., processing logic which reads, manipulates, transforms, etc. the data) is separate from the data itself when offline (or at rest) and is combined dynamically at run-time. As such, different executable graph-based models are utilized for different application areas and problem domains. The skilled person will appreciate that whilst only one executable graph-based model 302 is shown in Figure 3, in some embodiments a system stores and maintains more than one executable graph-based model.

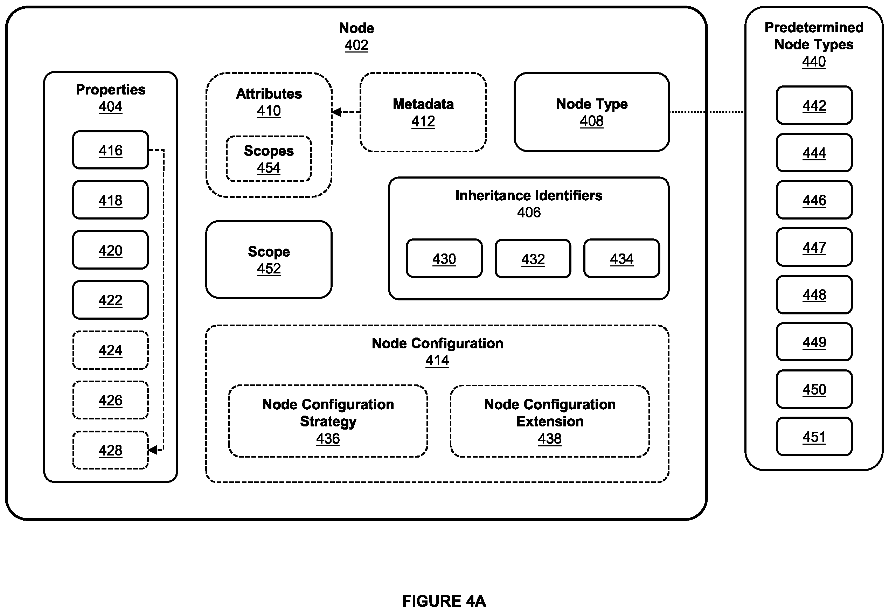

All elements within the executable graph-based model 302 (both the data and the data processing functionality) are nodes. In other words, nodes represent both the data and the data processing functionality within the executable graph-based model 302. As will be described in more detail in relation to Figure 4A below, a node forms the fundamental building block of all executable graph-based models such as the executable graph-based models 202 and 302. As such, the executable graph-based model 302 comprises one or more nodes which can be dynamically generated, extended, or processed by one or more other modules within the system 300 (e.g., by the data management module 314 and/or the overlay management module 316). Here, a dynamically generated node is a node within an executable graph-based model which is generated at run-time (e.g., using data obtained at run-time and/or in response to a stimulus or action received at run-time).

The interface module 304 provides a common interface between internal components of the system 300 and/or external sources. The interface module 304 provides an application programmable interface ("API"), scripting interface, or any other suitable mechanism for interfacing externally or internally with any module of the system 300. In the example shown in Figure 3, the configuration 334, the context 336, the data 338, and the stimuli 340 are received by the interface module 304 of the system 300 via the network 342. Similarly, outputs produced by the system 300, such as the outcome 344, are passed by the interface module 304 to the network 342 for consumption or processing by external systems. In one embodiment, the interface module 304 supports one or more messaging patterns or protocols such as the Simple Object Access protocol (SOAP), the REST protocol, and the like. The interface module 304 thus allows the system 300 to be deployed in any number of application areas, operational environments, or architecture deployments. Although not illustrated in Figure 3, the interface module 304 is communicatively coupled (i.e., connected either directly or indirectly) to one or more other modules or elements within the system 300 such as the controller module 306, the context module 310, the executable graph-based model 302 and the like. In one embodiment, the interface module 304 is communicatively coupled (i.e., connected either directly or indirectly) to one or more overlays within the executable graph-based model 302.

The controller module 306 handles and processes interactions and executions within the system 300. As will be described in more detail below, stimuli (and their associated contexts) provide the basis for all interactions within the executable graph-based model 302. Processing of such stimuli may lead to execution of processing logic associated with one or more overlays within the executable graph-based model 302. The processing of a stimulus within the system 300 may be referred to as a system transaction. The processing and execution of stimuli (and associated overlay execution) within the system 300 is handled by the controller module 306. The controller module 306 manages all received input stimuli (e.g., the stimuli 340) and processes them based on a corresponding context (e.g., the context 336). The context associated with a stimulus determines the priority that is assigned to processing the stimulus by the controller module 306. This allows each stimulus to be configured with a level of importance and prioritization within the system 300.

The controller module 306 maintains the integrity of the modules within the system 300 before, during, and after a system transaction. The transaction module 308, which is associated with the controller module 306, is responsible for maintaining integrity of the system 300 through the lifecycle of a transaction. Maintaining system integrity via the controller module 306 and the transaction module 308 allows a transaction to be rolled back in the event of an expected or unexpected software or hardware fault or failure. The controller module 306 is configured to handle the processing of stimuli and transactions through architectures such as parallel processing, grid computing, priority queue techniques, and the like. In one embodiment, the controller module 306 and the transaction module 308 are communicatively coupled (i.e., connected either directly or indirectly) to one or more overlays within the executable graph-based model 302.

As stated briefly above, the system 300 utilizes a context-driven architecture whereby a stimulus within the system 300 is associated with a context which is used to adapt the handling or processing of the stimulus by the system 300. The context module 310 manages the handling of contexts within the system 300 and is responsible for processing any received contexts (e.g., the context 336) and translating the received context to an operation execution context. In some examples, the operation execution context is larger than the received context because the context module 310 supplements the received context with further information necessary for the processing of the received context. The context module 310 passes the operational execution context to one or more other modules within the system 300 to drive the execution of the stimulus associated with the operational execution context. Contexts within the system 300 can be external or internal. While some contexts apply to all application areas and problem spaces, some applications may require specific contexts to be generated and used to process received stimuli. As will be described in more detail below, the executable graph-based model 302 is configurable (e.g., via the configuration 334) so as only to execute within a given execution context for a given stimulus.

The stimuli management module 312 processes externally received stimuli (e.g., the stimuli 340) and any stimuli generated internally from any module within the system 300. The stimuli management module 312 is communicatively coupled (i.e., connected either directly or indirectly) to one or more overlays within the executable graph-based model 302 to facilitate processing of stimuli within the executable graph-based model 302. The system 300 utilizes different types of stimuli such as a command (e.g., a transactional request), a query, or an event received from an external system such as an Internet-of Things (IoT) device. As previously stated, a stimulus can be either externally or internally generated. For example, a stimulus can be an event internally triggered (generated) from any of the modules within the system 300. Such internal stimuli indicate that something has happened within the system 300 such that subsequent handling by one or more other modules within the system 300 may be required. Internal stimuli can also be triggered (generated) from execution of processing logic associated with overlays within the executable graph-based model 302. The stimuli management module 312 communicates and receives stimuli in real-time or near-real-time. In some examples, stimuli are scheduled in a batch process. The stimuli management module 312 utilizes any suitable synchronous or asynchronous communication architectures or approaches in communicating the stimuli (along with associated information). All stimuli within the system 300 are received and processed (along with a corresponding context) by the stimuli management module 312, which then determines the processing steps to be performed. In one embodiment, the stimuli management module 312 processes the received stimuli in accordance with a predetermined configuration (e.g., the configuration 334) or dynamically determines what processing needs to be performed based on the contexts associated with the stimuli and/or based on the state of the executable graph-based model 302. In some examples, processing of a stimulus results in one or more outcomes being generated (e.g., the outcome 344). Such outcomes are either handled internally by one or more modules in the system 300 or communicated via the interface module 304 as an external outcome. In one embodiment, all stimuli and corresponding outcomes are recorded for auditing and post-processing purposes (e.g., by the operations module 330 and/or the analytics module 332).

The data management module 314 manages all data or information within the system 300 (e.g., the data 338) for a given application. Operations performed by the data management module 314 include data loading, data unloading, data modelling, and data processing. The data management module 314 is communicatively coupled (i.e., connected either directly or indirectly) to one or more other modules within the system 300 to complete some or all of these operations. For example, data storage is handled in conjunction with the storage management module 320 (as described in more detail below).

The overlay management module 316 manages all overlays within the system 300. Operations performed by the overlay management module 316 includes overlay and overlay structure modelling, overlay logic creation and execution, and overlay loading and unloading (within the executable graph-based model 302). The overlay management module 316 is communicatively coupled (i.e., connected either directly or indirectly) to one or more other modules within the system 300 to complete some or all of these operations. For example, overlays can be persisted in some form of physical storage using the storage management module 320 (as described in more detail below). As a further example, overlays can be compiled and preloaded into memory via the memory management module 318 for faster runtime execution. The design and functionality of overlays is discussed in greater detail in relation to Figure 4A below.

The memory management module 318 is configured to manage and optimize the memory usage of the system 300. The memory management module 318 thus helps to improve the responsiveness and efficiency of the processing performed by one or more of the modules within the system 300 by optimizing the memory handling performed by these modules. The memory management module 318 uses direct memory or some form of distributed memory management architecture (e.g., a local or remote caching solution). Additionally, or alternatively, the memory management module 318 deploys multiple different types of memory management architectures and solutions. (e.g., reactive caching approaches such as lazy loading or a proactive approach such as write-through cache may be employed). These architectures and solutions are deployed in the form of a flat (single-tiered) cache or a multi-tiered caching architecture where each layer of the caching architecture can be implemented using a different caching technology or architecture solution approach. In such implementations, each cache or caching tier can be configured (e.g., by the configuration 334) independently of the requirements for one or more of modules of the system 300. For example, data priority and an eviction strategy, such as least-frequently-used ("LFU") or least-recently-used ("LRU"), can be configured for all or parts of the executable graph-based model 302. In one embodiment, the memory management module 318 is communicatively coupled (i.e., connected either directly or indirectly) to one or more overlays within the executable graph-based model 302.

The storage management module 320 manages the temporary or permanent storage of data within the system 300. The storage management module 320 is any suitable low-level storage device solution (such as a file system) or any suitable high-level storage technology such as another database technology (e.g., relational database management system (RDBMS) or NoSQL database). The storage management module 320 is directly connected to the storage device upon which the relevant data is persistently stored. For example, the storage management module 320 can directly address the computer readable medium (e.g., hard disk drive, external disk drive, or the like) upon which the data is being read or written. Alternatively, the storage management module 320 is connected to the storage device via a network such as the network 342 shown in Figure 3. The storage management module 320 uses "manifests" to manage the interactions between the storage device and the modules within the system 300. In one embodiment, the storage management module 320 is communicatively coupled (i.e., connected either directly or indirectly) to one or more overlays within the executable graph-based model 302.

The security module 322 manages the security of the system 300. This includes the security at a system level and at a module level. Security is hardware related, network related, or software related, depending on the operational environment, the architecture of the deployment, or the data and information contained within the system 300. For example, if the system is deployed with a web-accessible API (as described above in relation to the interface module 304), then the security module 322 can enforce a hypertext transfer protocol secure (HTTPS) protocol with the necessary certification. As a further example, if the data or information received or processed by the system 300 contains Personally Identifiable Information (PII) or Protected Health Information (PHI), then the security module 322 can implement one or more layers of data protection to ensure that the PII or PHI are correctly processed and stored. In an additional example, in implementations whereby the system 300 operates on United States of America citizen medical data, the security module 322 can enforce additional protections or policies as defined by the United States Health Insurance Portability and Accountability Act (HIPAA). Similarly, if the system 300 is deployed in the European Union (EU), the security module 322 can enforce additional protections or policies to ensure that the data processed and maintained by the system 300 complies with the General Data Protection Regulation ("GDPR"). In one embodiment, the security module 322 is communicatively coupled (i.e., connected either directly or indirectly) to one or more overlays within the executable graph-based model 302 thereby directly connecting security execution to the data/information in the executable graph-based model 302. The security module 322 thus acts as a centralized coordinator working in conjunction with the data management module 314 and overlay management module 316 for managing and executing security-based overlays.

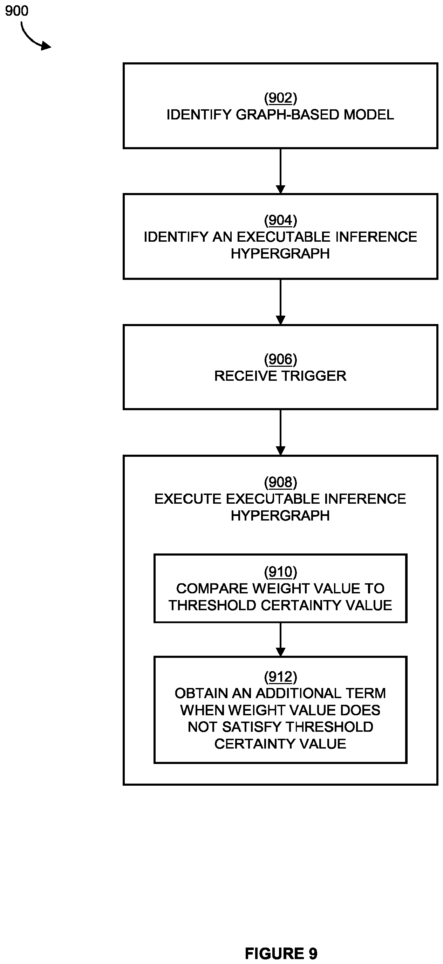

The visualization module 324 and the interaction module 326 facilitate display and interaction of the executable graph-based model 302 and other parts of the system 300. As described in more detail below in relation to Figures 9A-9GA, the visualization module 324 provides one or more displays, or visualizations, of the executable graph-based model 302 for review by a user of the system 300, whilst the interaction module 326 processes user interactions (e.g., inputs, commands, etc.) with the displays, or visualizations, and/or any other module within the system 300. The visualization module 324 and the interaction module 326 provide complex interactions capabilities such as standard two- and three-dimensional device interactions using a personal computer or mobile device and their attachable peripherals (e.g., keyboard, mouse, screen, etc.). Additionally, or alternatively, visualization module 324 and the interaction module 326 provide more advanced multi-dimensional user and visualization experiences such as virtual reality ("VR") or augmented reality ("AR") solutions. In one embodiment, the visualization module 324 and the interaction module 326 are communicatively coupled (i.e., connected either directly or indirectly) to one or more overlays within the executable graph-based model 302.

The administration module 328 manages all configurable embodiments of the system 300 and the associated modules therein. Configuration is either directly embedded within the modules of the system 300 (for example, via hardware, bios, or other systems settings that are preset in the manufacturing process or software development and installation processes) or provided as dynamic configurations (e.g., via the configuration 334). Such dynamic configurations are controllable and changeable by an end-user with the appropriate administrative privileges. In one embodiment, the degree of administrative privileges associated with an end-user are contained within a received context (e.g., the context 336). Here, the end-user is a person connected to the administration module 328 via the interface module 304 or a system user directly connected to the administration module 328. In one embodiment, the administration module 328 provides read-only access to all configuration settings or allows some (or all) of the configuration settings to be changed by specific user groups defined in the administration module 328 (e.g., all users associated with a user group having sufficient access privileges). In embodiments where configurations are pre-set or predetermined, the administration module 328 provides capabilities to reset or return the system 300 to its initial state or "factory settings". In one embodiment, the administration module 328 is communicatively coupled (i.e., connected either directly or indirectly) to one or more overlays within the executable graph-based model 302.

The operations module 330 tracks operational metrics, module behavior, and the system 300. Operational metrics tracked by the operations module 330 include the running status of each module, the operating performance of transactions performed, and any other associated metrics to help determine the compliance of the entire system, or any module thereof, in relation to non-functional requirements. In one embodiment, the operations module 330 is communicatively coupled (i.e., connected either directly or indirectly) to one or more overlays within the executable graph-based model 302.

The analytics module 332 performs any analytical processing required by the modules within the system 300. The analytics module 332 processes any data embedded, or overlay contained, within the executable graph-based model 302 or created separately by the system 300 (e.g., the operation metrics produced by the operations module 330). As such, the analytics module 332 is communicatively coupled (i.e., connected either directly or indirectly) to one or more nodes and/or one or more overlays within the executable graph-based model 302.

The template management module 346 performs operations in relation to template-driven generation of executable graph-based models. For example, the template management module 346 is used to generate specific instances of nodes from predefined templates. That is, the template management module 346 ensures ontology integrity by enforcing the structure and rules of a template when generating instances of the template at runtime. As such, the template management module 346 is communicatively coupled (i.e., connected either directly or indirectly) to one or more nodes and/or one or more overlays within the templated executable graph-based model 302.

The inference engine module 348 manages the organization and execution of inference hypergraphs. As such, the inference engine module 348 supports the forward-chaining and backward-chaining inference processing implemented by inference hypergraphs of the executable graph-based model 302. Here, forward-chaining is understood as referring to the inference processing approach where the goal is to derive new information or reach a specific conclusion based a set of inference rules and available data, and backward-chaining is understood as referring to the inference processing approach which starts with a goal or desired outcome and works backward to determine the conditions or data which must be true for that goal to be achieved. The inference engine module 348 utilizes several services-an inference graph service, an inference rule service, an inference algorithm service, an inference engine processing service, an inference session service, an inference trigger service, and an inference working storage service-and stores the outcome(s) of the service execution against the object for which the inference overlays are applied.

The inference graph service is used to define the structure for the inference hypergraph (alternatively referred to as a knowledge hypergraph, an inference knowledge hypergraph, or a knowledge graph). The inference hypergraph is constructed using the full capabilities associated to defining an executable graph-based model and executes processing logic in-situ using overlays, with the addition of specific overlay structure objects that support inference processing (as described below). As such, the inference hypergraph can be implemented as a fully operational executable graph-based model and not just a simple static data repository.

The inference rule service is used to define the inference rules that act on the inference hypergraph. That is, while the inference hypergraph can define a complex knowledge (hypergraph) structure, an additional level of inference processing can be created through the use of inference rules, which can utilize the combination of information stored in the inference hypergraph and the executable graph-based model defined for the problem space - this includes information and processing logic. All inference rules are implemented separately, and each inference rule is autonomous so that it can be reused and injected into the appropriate inference algorithm service based on context and appropriate rule configuration. Additionally, each inference rule can be weighted and used in fuzzy logic-based inference strategies for probabilistic-based inference information by the inference algorithm service.

The inference algorithms service is responsible for providing the inference logical processing solutions for performing forward-chaining and backward-chaining solutions in the inference engine module 348. Any number of algorithms can be created for the inference processing without impacting the overall execution of inference processing. Since the algorithms implemented are subject to the problem space in the which the system is being applied a detailed discussion is not presented further in the embodiments herein. However, for the purpose of illustration, examples are shown for forward-chaining inference reasoning, with a highly modified form of the RETE algorithm.

The inference engine service is responsible for performing the inference processing logic using the defined inference algorithm, inference graph, inference rules, inference session, and inference working storage. The inference engine service is initiated from a trigger which acts on the executable graph-based model 302.

The inference session service is responsible for creating a unique inference session for each unique inference determination, since the same inference processing logic can be concurrently executed for one or more executable graph-based model instances. That is the inference engine module 348 (specifically, the inference graph and inference rules) is designed for use with templates where a template is executed against an instance associated to the template. An inference session based on the problem space can be implemented as either: a) a single execution instance - where all instance state is available at the time of inference processing); or b) a re-enterable execution instance - where instance state may be provided over the course of multiple interactions with the inference engine module 348 or on a need to have basis.

The inference working storage service is responsible for managing the inference processing state for a single inference session for the specific inference algorithm that is being executed by the inference engine.

The contract management module 350 manages scope and contracts within the executable graph-based model 302. As will be described in more detail below, any content within the executable graph-based model 302 can be defined with a scope of "public", "private", or "protected". Contracts restrict access to portions of the executable graph-based model 302 to the access scope and security privileges defined by the contract and any associated security overlays. The contract management module 350 enables content within the executable graph-based model 302 to be marked with a restricting scope (e.g., "public", "private", etc.) thereby restricting access to those users who have the appropriate credentials sourced from information in the context 336. The contract management module 350 then provides secured access to the relevant portion(s) of the executable graph-based model 302 via one or more contracts that configure the security (user roles and associated privileges) using overlays. As such, the contract management module 350 can be considered an extension of, or coordinator with, the security module 322 to manage user access based on contracts and the received context 336 and stimuli 340. The contract management module 350 is communicatively coupled (i.e., connected either directly or indirectly) to one or more nodes and/or one or more overlays within the executable graph-based model 302.

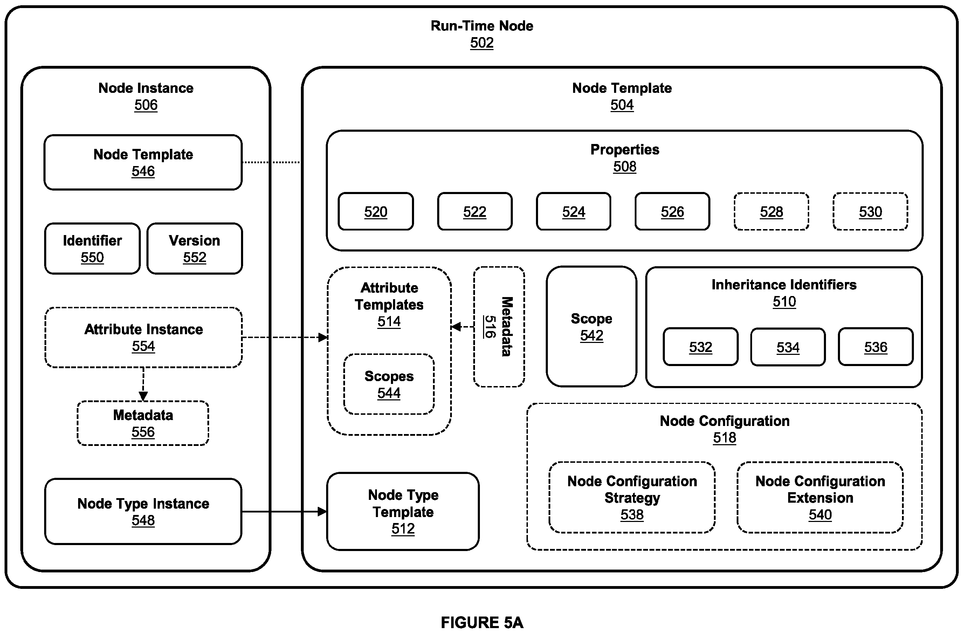

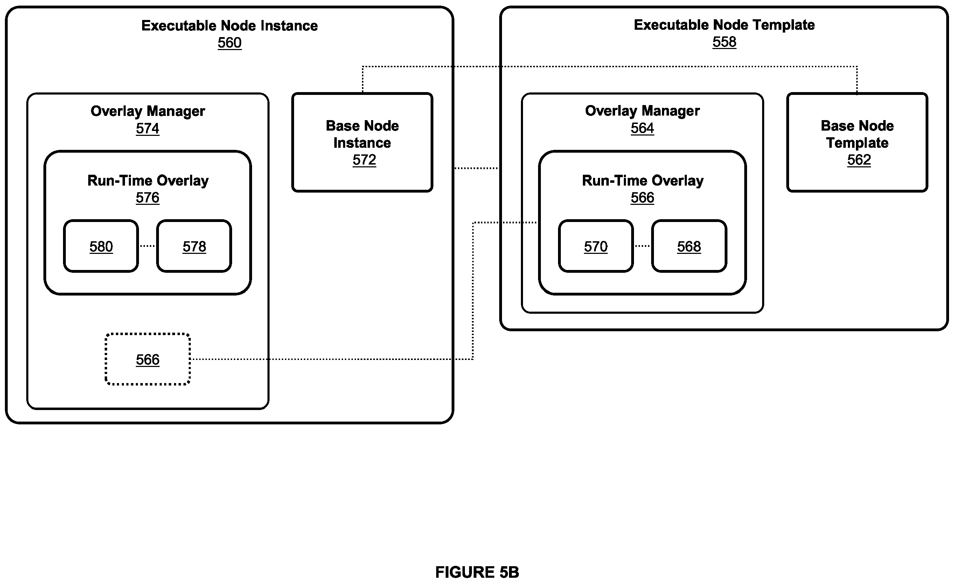

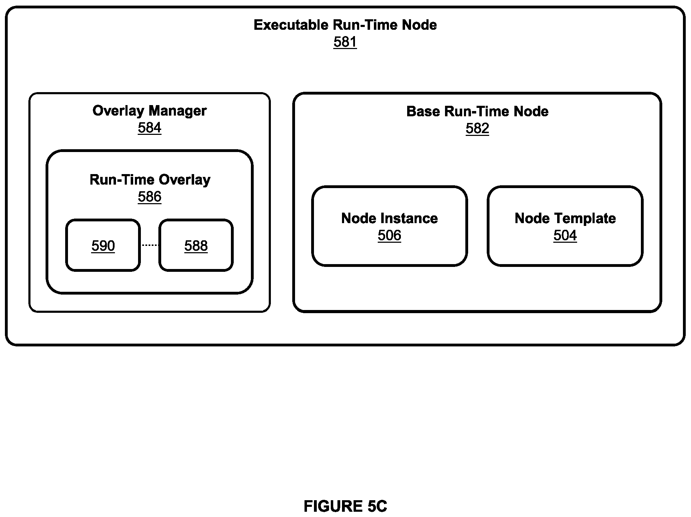

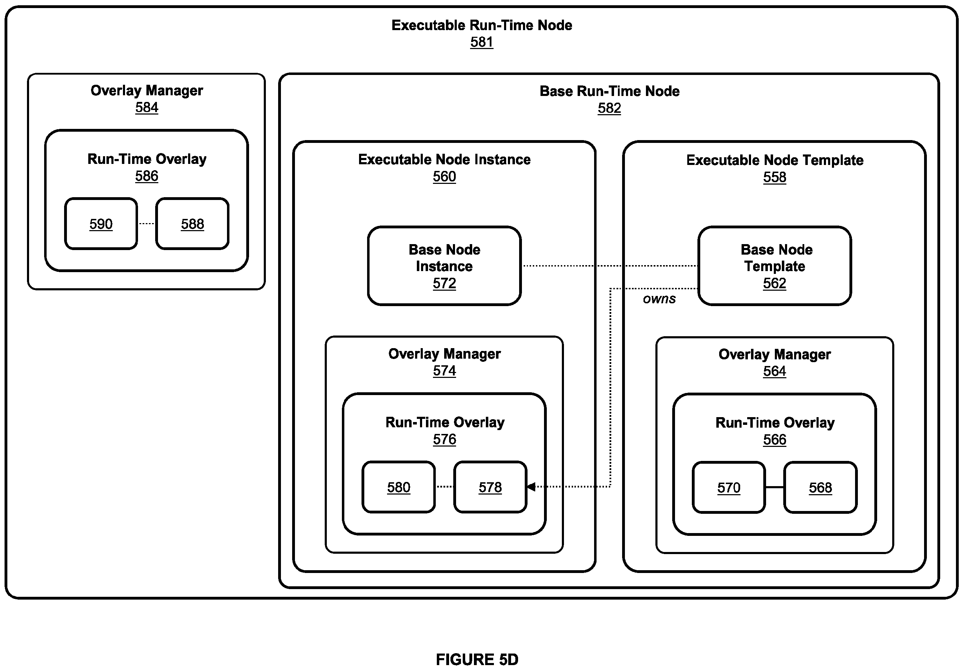

Having now described the system 300 for executing and managing executable graph-based models, the description will now turn to the elements of an executable graph-based model; specifically, the concept of a node. Unlike conventional graph-based systems, all objects (e.g., data, overlays, etc.) within the executable graph-based model (e.g., the executable graph-based model 302) are implemented as nodes. As will become clear, this allows executable graph-based models to be flexible, extensible, and highly configurable. In addition, the system 300 described above supports templating of a node such that multiple instances of a node template may be generated to form multiple runtime nodes (as described in relation to Figure 5 below).

Figure 4A shows the general structure of a node 402 within an executable graph-based model, such as the executable graph-based model 302 shown in Figure 3, according to an embodiment of the present disclosure.

Figure 4A shows a node 402 which corresponds to the core structure of an executable graph-based model (e.g., the executable graph-based model 302 shown in the system 300 of Figure 3) and which forms the foundational building block for all data and data processing logic within the executable graph-based model. The node 402 comprises properties 404, inheritance identifiers 406, and node type 408. The node 402 optionally comprises one or more attributes 410, metadata 412, a node configuration 414. The properties 404 of the node 402 include a unique identifier 416, a version identifier 418, a namespace 420, and a name 422. The properties 404 optionally include one or more icons 424, one or more labels 426, and one or more alternative identifiers 428. The inheritance identifiers 406 of the node 402 comprise an abstract flag 430, a leaf flag 432, and a root flag 434. The node configuration 414 optionally comprises one or more node configuration strategies 436 and one or more node configuration extensions 438. Figure 4A further shows a plurality of predetermined node types 440 which include a value node type 442, an overlay node type 444, an edge node type 446, a role node type 447, an inference hyperedge node type 448, an inference role node type 449, a container node type 450, and a contract node type 451. According to an embodiment of the present disclosure, the node 402 further comprises a scope 452 and the one or more attributes 410 comprise one or more scopes 454.

The unique identifier 416 is unique for each node within an executable graph-based model. The unique identifier 416 is used to register, manage, and reference the node 402 within the system (e.g., the system 300 of Figure 3). In some embodiments, the one or more alternative identifiers 428 are associated with the unique identifier 416 to help manage communications and connections with external systems (e.g., during configuration, sending stimuli, or receiving outcomes). The version identifier 418 of the node 402 is incremented when the node 402 undergoes transactional change. This allows the historical changes between versions of the node 402 to be tracked by modules or overlays within the system. The namespace 420 of the node 402, along with the name 422 of the node 402, is used to help organize nodes within the executable graph-based model. That is, the node 402 is assigned a unique name 422 within the namespace 420 such that the name 422 of the node 402 need not be unique within the entire executable graph-based model, only within the context of the namespace 420 to which the node 402 is assigned.

The node 402 optionally comprises one or more icons 424 which are used to provide a visual representation of the node 402 when visualized (e.g., by the visualization module 324 of the system 300 shown in Figure 3). The one or more icons 424 can include icons at different resolutions and display contexts such that the visualization of the node is adapted to different display settings and contexts. The node 402 also optionally comprises one or more labels 426 which are used to override the name 422 when the node is rendered or visualized.

The node 402 supports the software development feature of multiple inheritance by maintaining references (not shown) to zero or more other nodes, which then act as the base of the node 402. This allows the behavior and functionality of a node to be extended or derived from one or more other nodes within an executable graph-based model. The inheritance identifiers 406 of the node 402 provide an indication of the inheritance-based information, which is applicable, or can be applicable, to the node 402. The inheritance identifiers 406 comprise a set of Boolean flags which identify the inheritance structure of the node 402. The abstract flag 430 of the inheritance identifiers 406 allows the node 402 to support the construct of abstraction. When the abstract flag 430 takes a value of "true", the node 402 is flagged as abstract meaning that it cannot be instantiated or created within an executable graph-based model. Thus, a node having the abstract flag 430 set to "true" can only form the foundation of another node that inherits from it. By default, the abstract flag 430 of a node is set to "false". The leaf flag 432 of the inheritance identifiers 406 is used to indicate whether any other node can inherit from the node 402. If the leaf flag 432 is set to "true", then no other node can inherit from the node 402 (but unlike an abstract node, a node with a leaf flag set can still be instantiated and created within an executable graph-based model). The root flag 434 of the inheritance identifiers 406 is used to indicate whether the node 402 inherits from any other node. If the root flag 434 is set to "true", then the node 402 does not inherit from any other node. The node 402 is flagged as leaf (i.e., the leaf flag 432 is set to "true") and/or root (i.e., the root flag 434 is set to "true"), or neither (i.e., both the leaf flag 432 and the root flag 434 are set to "false"). The skilled person will appreciate that a node cannot be flagged as both abstract and leaf (i.e., the abstract flag 430 cannot be set to "true" whilst the leaf flag 432 is set to "true").

As stated above, all elements of the executable graph-based model are defined as nodes. This functionality is in part realized due to the use of a node type. The node type 408 of the node 402 is used to extend the functionality of the node 402. All nodes within an executable graph-based model comprise a node type which defines additional data structures and implements additional executable functionality. A node type thus comprises data structures and functionality that is common across all nodes which share that node type. The composition of a node with a node type therefore improves extensibility by allowing the generation of specialized node functionalities for specific application areas. Such extensibility is not present in prior art graph-based models. As illustrated in Figure 4A, the node 402 and the node type 408 are one logical unit which are not separated in the context of an executing system at runtime (i.e., in the context of execution of an executable graph-based model).

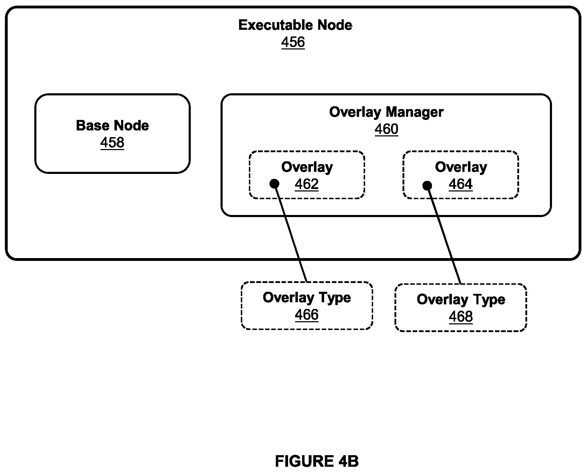

Figure 4A shows the plurality of predetermined node types 440 which provides a non-exhaustive list of node types which can be associated with a node, such as the node 402. The value node type 442 (also referred to as a vertex, vertex node type, or data node type) comprises common data structure and functionality related to the "things" modelled in the graph-i.e., the data. The value node type 442 may be used to encapsulate or represent a single value within a graph-based model such that a value node (a node having a value node type) is a node having a value thereby enabling the value to be represented as a first order element (node) within the graph-based model. The overlay node type 444 is used to extend the functionality of a node, such as the node 402, to incorporate processing logic (as will be described in more detail below in relation to Figure 4B).

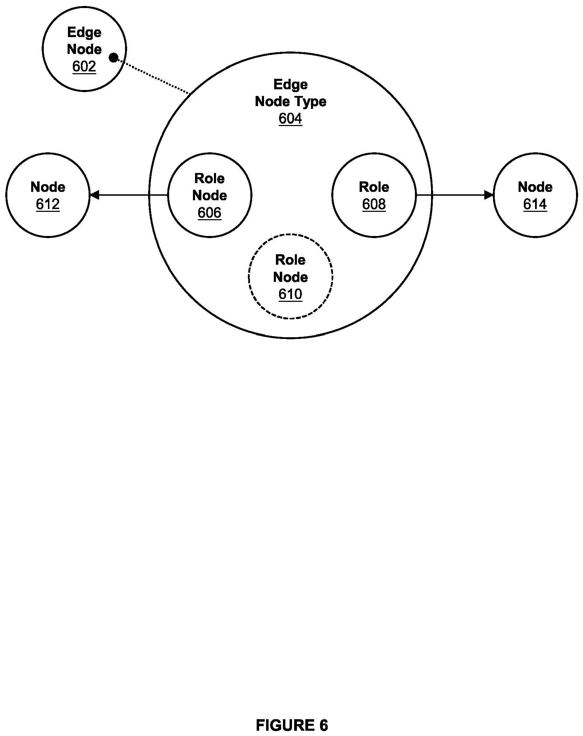

The edge node type 446 comprises common data structures and functionality related to joining two or more nodes. A node having the edge node type 446 can connect two or more nodes and thus the edge node type 446 constructs associations and connections between nodes (for example objects or "things") within the executable graph-based model. The edge node type 446 is not restricted to the number of nodes that can be associated or connected by a node having the edge node type 446. The data structures and functionality of the edge node type 446 thus define a hyper-edge which allows two or more nodes to be connected through a defined set of roles. As will be described in more detail below, a role which defines a connective relationship involving an edge is either a (standard) role, as is known within standard hyper-graph theory such that the role merely defines a connection between the edge and another node, or the role is a node having the role node type 447. These concepts are illustrated in Figure 6 described below.

The inference hyperedge node type 448 is an extension of the edge node type 446 with additional functionality and structures specific for use within an inference hypergraph (as described below). As such, the inference hyperedge node type 448 enjoys all the functionality and structure of the edge node type 446 described above and illustrated in Figure 6. In general, an inference hyperedge node type 448 represents the construct of an inference rule-a way to infer a proposition or conclusion from one or more premises or statements. The inference rule is defined by a left-hand-side (LHS) expression or statement and a right-hand-side (RHS) expression or statement. Typically, the LHS expression equates to the RHS expression (i.e., LHS ⇔ RHS) with the LHS representing a conditional statement and the RHS representing the outcome. Nodes (e.g., value nodes, data nodes, edges, hyperedges, etc.) may be coupled to an inference hyperedge node type 448 and assigned to either the LHS or RHS of the inference rule according to a role. That is, the inference hyperedge node type 448 supports LHS roles which connect a node to a LHS expression of the inference rule and RHS roles which connect a node to a RHS expression of the inference rule (e.g., via the inference role node type 449). The inference hyperedge node type 448 further comprises an inference operator which is configurable to define the operator to be used (e.g., a logical AND, OR, XOR, etc.) to evaluate the LHS expression when two or more nodes are coupled to LHS roles.

The container node type 450 is an example of a group node type. That is, this type extends the functionality of the node 402 by providing a mechanism for grouping related nodes. The container node type 450 comprises an aggregation of related nodes. That is, the container node type 450 encapsulates (comprises or comprises references to) one or more other nodes. Each of these nodes are thus a part of the container defined by the node 402 and the container node type 450 within the corresponding executable graph-based model.

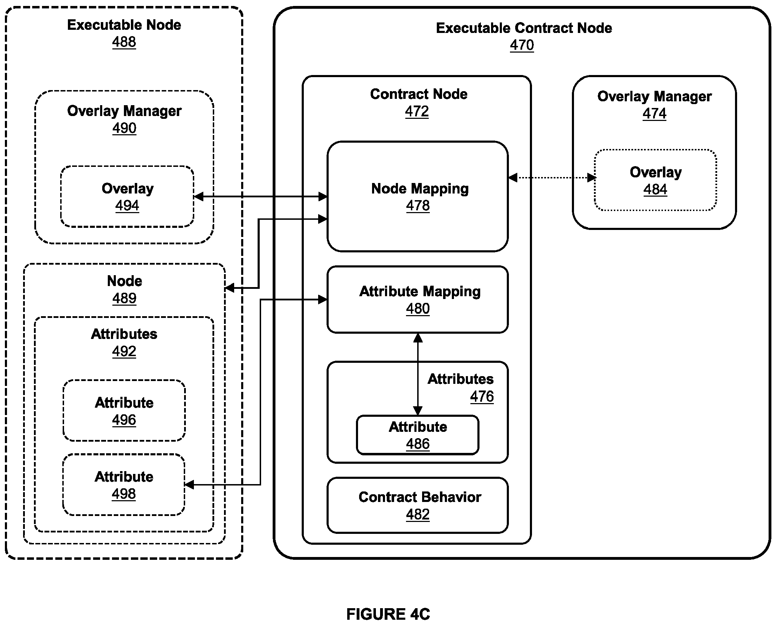

The plurality of predetermined node types 440 shown in Figure 4A further comprise the contract node type 451. As will be described in more detail below in relation to Figures 4C and 6A below, the contract node type 451 is used to define and restrict access to one or more nodes and/or one or more attributes of nodes within a node group (e.g., a container, etc.).

The one or more attributes 410 correspond to the data associated with the node 402 (e.g., the data represented by the node 402 within the executable graph-based model as handled by a data management module such as the data management module 314 of the system 300 shown in Figure 3). Because not all nodes within an executable graph-based model are associated with data, a node need not have any attributes. Each of the one or more attributes 410 are stored in any suitable format such as a data triplet of name, value type, and value.

The node 402 optionally comprises metadata 412 (e.g., data stored as a name, value type, and value triplet) which is associated with either the node 402 or one or more of the one or more attributes 410 of the node 402.

The node configuration 414 provides a high degree of configurability for the different elements of a node. The node configuration 414 optionally comprises one or more node configuration strategies 436 and/or one or more node configuration extensions 438 which are complex data types. An example of a concrete node configuration strategy is an identifier strategy, associated with the configuration of the unique identifier 416 of the node 402, which creates Snowflake identifiers. A further example of a concrete node configuration strategy is a versioning strategy, associated with the configuration of the version identifier 418 of the node 402, which supports major and minor versioning (depending on the type of transactional change incurred by the node 402).

According to an embodiment of the present disclosure, both the node 402 and the one or more attributes 410 of the node 402 (if the node comprises attributes) are scoped. That is, the node 402 comprises the scope 452 and the one or more attributes 410 comprise the one or more scopes 454 (i.e., each of the one or more attributes 410 comprises a corresponding scope within the one or more scopes 454). Scopes which may be assigned to either the scope 452 or each of the one or more scopes 454 include "public" scope, "private" scope, and "protected" scope, the definitions of which align with standard software development practices and terminology. The effects of different scopes on the node 402 and the one or more attributes 410 are described in more detail below.

The structure and functionality of the node 402 (as described above) can be dynamically extended using the concept of an executable node. As described in relation to Figure 4B below, an executable node provides processing functionality (i.e., processing logic) for a base node via one or more associated overlay nodes.

Figure 4B shows an executable node 456 according to an embodiment of the present disclosure.

The executable node 456 comprises a base node 458 and an overlay manager 460. The overlay manager 460 registers and maintains one or more overlay nodes associated with the base node 458, such as the first overlay node 462 and the second overlay node 464. The first overlay node 462 has a first overlay node type 466 and the second overlay node 464 has a second overlay node type 468.

The executable node 456 is itself a node; that is, the executable node 456 extends the node 402 (or is a subtype of the node 402) such that all the functionality and properties of the node 402 extend to the executable node 456. The executable node 456 also dynamically extends the functionality of the base node 458 by associating the overlays maintained by the overlay manager 460 with the base node 458. The executable node may thus be considered a composition of a base node and an overlay node and may alternatively be referred to as a node with overlay. For example, the base node 458 may have a value node type associated with a user, and the overlay manager 460 may comprise an encryption overlay which has processing logic that encrypts the attribute values of the base node 458 (e.g., the values of the one or more attributes 410 shown in Figure 4A) prior to the values being saved or output from the system. Therefore, the executable node 456 acts as a decorator of the base node 458 adding the functionality of the overlay manager 460 to the base node 458.

The skilled person will appreciate that the base node 458 refers to any suitable node within an executable graph-based model. As such, the base node 458 can be a node having a type such as a value node type (e.g., the value node type 442 shown in Figure 4A), an overlay node type (e.g., the overlay node type 444 shown in Figure 4A), or the like. Alternatively, the base node 458 can itself be an executable node such that the functionality of the base (executable) node 458 is dynamically extended. In this way, complex and powerful processing functionality can be dynamically generated by associating and extending overlay nodes.

The overlay manager 460 registers and maintains one or more overlay nodes associated with the base node 458, such as the first overlay node 462 and the second overlay node 464. The assignment of an overlay node to a base node (via the overlay manager 460) endows the base node with processing logic and executable functionality defined within the overlay node. Extending the functionality of a base node through one or more overlay nodes is at the heart of the dynamic generation of executable graph-based models according to an embodiment of the present disclosure. As illustrated in Figure 2 above, the data (e.g., a value node as represented by the base node 458 in Figure 4B) and the functionality which acts upon that data (e.g., an overlay node) can be separated and independently maintained offline, but at runtime, an association between the value node and the overlay node is determined and an executable node is generated (e.g., the executable node 456 shown in Figure 4B).

An overlay node, such as the first overlay node 462 or the second overlay node 464, is a node having an overlay node type (alternatively referred to as an overlay type) assigned to its node type. As shown in Figure 4B, the first overlay node 462 has the first overlay node type 466 and the second overlay node 464 has the second overlay node type 468. Different overlay node types are used to realize different functionality. Example overlay node types include an encryption overlay node type, an obfuscation overlay node type, an audit overlay node type, a prediction overlay node type, and the like. For example, if the first overlay node type 466 is an obfuscation node type and the second overlay node type 468 is an encryption node type then the functionality of the base node 458 is extended to provide obfuscation and encryption of attribute values of the base node 458. The skilled person will appreciate that the list of overlay types is in no way exhaustive and the number of different overlay types that can be realized is not limited. Because an overlay node is itself a node, all functionality of a node described in relation to the node 402 of Figure 4A is thus applicable to an overlay node. For example, an overlay node comprises a unique identifier, a name, etc., can have attributes (i.e., an overlay node can have its own data defined), supports multiple inheritance, and can be configured via node configurations. Furthermore, because an overlay node is a node, the overlay node can have one or more overlay nodes associated therewith (i.e., the overlay node is an overlay with overlay node). Moreover, the processing functionality of an overlay node extends to the node type of the node to which the overlay node is applied.

An overlay node, such as the first overlay node 462 or the second overlay node 464, is not bound to a single executable node or a single executable graph-based model (unlike nodes which have non-overlay node types). This allows overlay nodes to be centrally managed and reused across multiple instances of executable graph-based models.

Unlike non-overlay nodes, an overlay node comprises processing logic (not shown in Figure 4B) which determines the functionality of the overlay node. The processing logic of an overlay node comprises a block of executable code, or instructions, which carries out one or more operations. The block of executable code is pre-compiled code, code which requires interpretation at runtime, or a combination of both. Different overlay nodes provide different processing logic to realize different functionality. For example, an encryption overlay node comprises processing logic to encrypt the data (i.e., attributes) of a value node associated with the encryption overlay node, whilst an auditing overlay node comprises processing logic to record changes to the nodes state of a node associated with the auditing overlay node.

The overlay manager 460 of the executable node 456 is responsible for executing all overlays registered with the overlay manager 460. The overlay manager 460 also coordinates execution of all associated overlay nodes. In the example shown in Figure 4B, the executable node 456 associates the base node 458 with two overlay nodes-the first overlay node 462 and the second overlay node 464. Thus, the overlay manager 460 employs a strategy to manage the potentially cascading execution flow. Example strategies to manage the cascading execution of overlays include the visitor pattern and the pipe and filter pattern. Further examples include strategies which apply either depth-first or depth-first processing patterns, a prioritization strategy, or a combination thereof. All execution strategies are defined and registered with the overlay manager 460 and are associated with an overlay via a node configuration extension for the overlay.

A rule overlay node is an overlay node specifically used for inference processing within an inference hypergraph. That is, a rule overlay node is an overlay node with additional logic associated to an inference rule overlay node type. A rule overlay node defines one or more configured inference rules that are evaluated at runtime using terms encapsulated by a hyperedge to which the rule overlay node is coupled. An inference rule can be defined for a specific context such that the inference rule is only evaluated/executed in accordance with the specific context. In one embodiment, a rule overlay node comprises processing logic for an "is rule" which determines if a LHS expression equates to a RHS expression according to an inference operator (e.g., equal-to, not-equal-to, less-than, etc.). The inference operator can be a configurable property of the rule overlay node thereby allowing the rule overlay node to be reused across different problem domains and inference rules.

According to an embodiment of the present disclosure, access to nodes and executable nodes within an executable graph-based model can be controlled using a contract node (otherwise referred to as a contract) as shown in Figure 4C.

Figure 4C shows the structure of an executable contract node 470 according to an embodiment of the present disclosure.

The executable contract node 470 is an executable node and has a contract node 472, and an overlay manager 474. The contract node 472 is a node having a contract node type (i.e., the contract node type 451 shown in Figure 4A) and comprises one or more attributes 476. The contract node type of the contract node 472 comprises a node mapping 478, an attribute mapping 480, and a contract behavior 482. The node mapping 478, the attribute mapping 480, and the contract behavior 482 are a part of the contract node type but are shown in Figure 4C as part of the contract node 472 for brevity and ease of reference. The overlay manager 474 of the executable contract node 470 comprises a first overlay 484. The one or more attributes 476 of the contract node 472 comprise a first attribute 486.

Figure 4C further shows a target executable node 488 which is an executable node comprising a target base node 489 and an overlay manager 490. The target base node 489 comprises one or more attributes 492. The overlay manager 490 comprises a target overlay 494. The one or more attributes 492 comprises a non-target attribute 496 and a target attribute 498. The target executable node 488 is public and the target attribute 498 is public (i.e., they both have "public" scope). The target executable node 488 is within a node group (not shown) which can be either public, private, or protected.

The contract node 472 comprises all of the structure and functionality of a node as described above in relation to the node 402 shown in Figure 4A. The skilled person will appreciate that this structure and functionality (e.g., properties, scope, etc.) has been omitted from the representation in Figure 4C for brevity. The contract node type (not shown) is used to define and restrict access to nodes and/or attributes within a node group (e.g., a container, etc.) using the node mapping 478 and the attribute mapping 480.

At a general level, the executable contract node 470 acts as a proxy for functionality and data associated with the target base node 489 and/or the target executable node 488 from requests outside of the node group within which the target executable node 488 is contained. Whilst the following description focusses on a scenario involving an executable contract node, the skilled person will appreciate that the description is applicable to a scenario involving a non-executable contract node (e.g., a scenario involving only the contract node 472 and the target base node 489). The executable contract node 470 does not directly expose the functionality and data of the target executable node 488. Indeed, calls made to the executable contract node 470 need not know that the target executable node 488 exists. Rather, the executable contract node 470, via the node mapping 478 and/or the attribute mapping 480 of the contract node 472, replicates the functionality and data of the target executable node 488. Nodes outside of the group containing the target executable node 488 need not know that either the target executable node 488, or the target base node 489, or the target attribute 498, exist since they are exposed via the executable contract node 470.

The node mapping 478 (alternatively referred to as a node access) maps to one or more public nodes within a node group such as a container. In Figure 4C, the node mapping 478 maps to the target base node 489 which is a public node within a node group (which can be public, private, or protected). In one embodiment, the node mapping 478 also exposes the overlays that are associated with the target base node 489 via the target executable node 488 by mapping, at runtime, the target overlay 494 of the target executable node 488 to the overlay manager 474 of the executable contract node 470. In another embodiment, a dedicated overlay mapping of the contract node type performs the functionality regarding overlay mappings. In the example shown in Figure 4C, the first overlay 484 associated with the executable contract node 470 is a representation of the target overlay 494 mapped at runtime from the target executable node 488 by the node mapping 478. Therefore, the executable contract node 470 replicates the functionality of the target executable node 488-as defined in the target overlay 494-through the use of the node mapping 478. Nodes outside of the node group which contains the target executable node 488 are thus able to utilize this functionality via the executable contract node 470 without the target executable node 488 being exposed. The node mapping 478 may also map other structures or functionality of the target base node 489 to the contract node 472. For example, the node mapping 478 may also map the functionality (overlays) and data (attributes) of a node to the contract node 472 thereby fully replicating the node.

The attribute mapping 480 (alternatively referred to as an attribute access) maps to one or more public attributes of a public node in a node group. In Figure 4C, the attribute mapping 480 provides access to the target attribute 498 of the target base node 489. The target attribute 498 is an attribute of the target base node 489 having public scope. The contract node 470 does not directly expose (i.e., provide direct access to) the target attribute 498. Rather, the attribute mapping 480 maps from the target attribute 498 of the target base node 489 to the first attribute 486 of the contract node 472. As such, the first attribute 486 is a proxy for the target attribute 498 and allows nodes outside of the node group containing the target base node 489 to access the target attribute 498, albeit indirectly, without the target attribute 498 being exposed.

Both the node mapping 478 and the attribute mapping 480 can be implemented hierarchically, addressing the case where the executable contract node 470 may be inherited or where the access can be defined once and reused.

The contract behavior 482 defines functionality related to the contract node 472 which allows specific contract implementations to be created. That is, different contract behaviors may be available to be incorporated into a contract to modify the behavior of the contract. For example, a ledger contract behavior can utilize a blockchain, or other distributed ledger solution, to ensure adherence to contract rules and track the nodes that have been accessed via the contract type.

Figure 5A shows the general structure of a runtime node 502 according to an embodiment of the present disclosure.

The runtime node 502 comprises a composition of a node template 504 and a node instance 506 generated according to the node template 504. The runtime node 502 shown in Figure 5A is a compositional structure which is generated, and executed, at runtime as part of a templated (template-based or template-driven) executable graph-based model. That is, whilst the node template 504 is defined "offline", the node instance 506 and runtime node 502 are runtime structures which are dynamically generated during execution of a templated executable graph-based model.

The node template 504 comprises properties 508, inheritance identifiers 510, and node type template 512. The node template 504 optionally comprises attribute templates 514, metadata 516, and a node configuration 518. The properties 508 of the node template 504 include a unique identifier 520, a version identifier 522, a namespace 524, and a name 526. The properties 508 optionally include one or more icons 528 and one or more labels 530. The inheritance identifiers 510 of the node template 504 comprise an abstract flag 532, a leaf flag 534, and a root flag 536. The node configuration 518 optionally comprises one or more node configuration strategies 538 and one or more node configuration extensions 540. The node template further comprises a scope 542 and the attribute templates 514 comprise one or more scopes 544. The node instance 506 comprises a node template 546 and a node type instance 548. The node instance 506 also comprises properties including a unique identifier 550 and a version identifier 552. The node instance 506 optionally comprises attribute instances 554 and metadata 556.

The node template 504 and the node instance 506 form the foundation for all objects within a template-driven executable graph-based model. The node template 504 defines all the structural and behavioral embodiments of an ontology. That is, the node template 504 defines what is allowed for the runtime node 502 when generated as part of an executable graph-based model. The node template 504 may thus be considered to comprise a predetermined node structure and define one or more rules which govern generation of node instances which are based on the node template 504. The node instance 506 is the actual instance implementation of the node template 504 (and its corresponding definitions) for the runtime node 502. That is, the node instance 506 is generated according to the predetermined node structure and one or more rules of the node template 504. Every node instance is associated with a node template; but a node template need not be associated with a node instance. As shown in Figure 5A, the node instance 506 is associated with a single node template (i.e., the node template 504), but the node template 504 may be associated with zero or more node instances. The node template 504 is mutable in the context of template management (e.g., when part of an "offline" graph-based model or structure) but is immutable (read only) when used as part of the runtime node 502 during execution-i.e., during execution, only the node instance 506 of the runtime node 502 may be modified. The runtime node 502 may be represented as a facade which encapsulates the data and capabilities of the node template 504 and the node instance 506 and delegates responsibilities accordingly. That is, the runtime node 502 does not contain any data, and does not perform any of the capabilities, directly.

The unique identifier 520 is unique for each node template within an executable graph-based model. Similarly, the unique identifier 550 is unique for each node instance within an executable graph-based model. That is, a node instance does not share the identifier of its associated node template. The unique identifier 520 and the unique identifier 550 are used to register, manage, and reference the node template 504 and the node instance 506 within the system (e.g., the system 300 of Figure 3). The version identifier 522 of the node template 504 is incremented when the node template 504 undergoes transactional change. Similarly, the version identifier 552 of the node instance 506 is incremented when the node instance 506 undergoes transitional change. This allows the historical changes between versions of the node template 504 and/or the node instance 506 to be tracked by modules or overlays within the system. The namespace 524 of the node template 504, along with the name 526 of the node template 504, is used to help organize node templates within the executable graph-based model. That is, the node template 504 is assigned a unique name 526 within the namespace 524 such that the name 526 of the node template 504 need not be unique within the entire executable graph-based model, only within the context of the namespace 524 to which the node template 504 is assigned.

The node template 504 optionally comprises one or more icons 528 which are used to provide a visual representation of the node template 504 when visualized (e.g., by the visualization module 324 of the system 300 shown in Figure 3). The one or more icons 528 can include icons at different resolutions and display contexts such that the visualization of the node is adapted to different display settings and contexts. The node template 504 also optionally comprises one or more labels 530 which are used to override the name 526 when the node template is rendered or visualized.

The node template 504 supports the software development feature of multiple inheritance by maintaining references (not shown) to zero or more other node templates, which then act as the base of the node template 504. This allows the behavior and functionality of a node template to be extended or derived from one or more other node templates within an executable graph-based model. The node instance 506 likewise supports multiple inheritance because it is an instance representation of the node template 504. The multiple inheritance structure of the node instance 506 is, however, limited to the corresponding instance realization of the multiple inheritance structure defined by the node template 504-i.e., one node instance is created and managed for each node template defined in the inheritance hierarchy for a node instance of a node template. The inheritance identifiers 510 of the node template 504 provide an indication of the inheritance-based information, which is applicable, or can be applicable, to the node template 504. The inheritance identifiers 510 comprise a set of Boolean flags which identify the inheritance structure of the node template 504. The abstract flag 532 of the inheritance identifiers 510 allows the node template 504 to support the construct of abstraction. When the abstract flag 532 takes a value of "true", the node template 504 is flagged as abstract meaning that it cannot be instantiated or created within an executable graph-based model. Thus, a node template having the abstract flag 532 set to "true" can only form the foundation of another node template that inherits from it. By default, the abstract flag 532 of a node template is set to "false". The leaf flag 534 of the inheritance identifiers 510 is used to indicate whether any other node template can inherit from the node template 504. If the leaf flag 534 is set to "true", then no other node template can inherit from the node template 504 (but unlike an abstract node, a node template with a leaf flag set can still be instantiated and created within an executable graph-based model). The root flag 536 of the inheritance identifiers 510 is used to indicate whether the node template 504 inherits from any other node template. If the root flag 536 is set to "true", then the node template 504 does not inherit from any other node template. The node template 504 is flagged as leaf (i.e., the leaf flag 534 is set to "true") and/or root (i.e., the root flag 536 is set to "true"), or neither (i.e., both the leaf flag 534 and the root flag 536 are set to "false"). The skilled person will appreciate that a node template cannot be flagged as both abstract and leaf (i.e., the abstract flag 532 cannot be set to "true" whilst the leaf flag 534 is set to "true").

All elements of a templated executable graph-based model are defined as nodes-node templates or node instances. This functionality is in part realized due to the use of a node type. In general, a node type imbues a node template/instance with common data structures and/or functionality such that all node templates/instances having that node type share the common data structures and/or functionality. A node type comprises two components: a node type template (e.g., the node type template 512) and a corresponding node type instance (e.g., the node type instance 548), which is an implementation of the node type template. This enables multiple implementations of a template's core structure and functionality to be realized. Each node template comprises a single node type template. Similarly, each node instance comprises a single node type instance associated with a node type template. That is, a node type instance, associated with a node instance, is associated with a node type template of a node template for the node instance.

The node type template 512 of the node template 504 is used to extend the functionality of the node template 504 by defining the standard set of capabilities, including data and associated behavior, for the specialized node type it will represent. For example, a node type template associated with a value node type will define the standard capabilities for the node template (and corresponding node instance) which take this node type. The node type instance 548 is an instance of the node type template 512 definition and holds any instance data or instance specific behavior. Example node types include a value node type, an edge node type, and an overlay node type. As will be described in more detail below, the overlay node type is used to extend the functionality of a node to incorporate default data-oriented processing logic.

The attribute templates 514 correspond to the data defined by the node template 504. For example, the attribute templates 514 may define the names and value types (e.g., integer, string, float, etc.) of one or more attributes but not the values of these attributes. The values of the attribute templates 514 may be defined by the attribute instances 554 of the node instance 506 through one or more values or instance values. For example, a node template may define a string attribute "surname" and a corresponding node instance may assign the instance value "Bell-Richards" to this string attribute. Each attribute instance is associated with an attribute template. The node template 504 may define one or more default values for the attribute templates 514. The default values correspond to the values that the attributes take if no value is assigned. The node template 504 also optionally comprises metadata 516 (e.g., data stored as a name, value type, and value triplet) which is associated with either the node template 504 or one or more of the attribute templates 514 of the node template 504. Similarly, the node instance 506 also optionally comprises metadata 556 (e.g., data stored as a name, value type, and value triplet) which is associated with either the node instance 506 or one or more of the attribute instances 554.

The node configuration 518 provides a high degree of configurability for the different elements of a node template and/or a node instance. The node configuration 518 optionally comprises one or more node configuration strategies 538 and/or one or more node configuration extensions 540. An example of a concrete node configuration strategy is an identifier strategy, associated with the configuration of the unique identifier 520 of the node template 504 and/or the configuration of the unique identifier 550 of the node instance 506, which creates Snowflake identifiers. A further example of a concrete node configuration strategy is a versioning strategy, associated with the configuration of the version identifier 522 of the node template 504 and/or the version identifier 552 of the node instance 506, which supports major and minor versioning (depending on the type of transactional change incurred).

According to an embodiment of the present disclosure, the structure and functionality of the runtime node 502, the node template 504, and/or the node instance 506 can be dynamically extended using the concept of overlays to generate executable nodes-i.e., executable runtime nodes, executable node templates, and executable node instances. As described in relation to Figures 5B-5D below, executable nodes provide processing functionality (i.e., processing logic) for a base node, such as a runtime node, a node template, or a node instance, via one or more associated overlays.

Figure 5B shows an executable node template 558 and an executable node instance 560 according to an embodiment of the present disclosure.

The executable node template 558 comprises a base node template 562 and an overlay manager 564. The overlay manager 564 maintains one or more runtime overlays such as the first runtime overlay 566 which comprises a first overlay template 568 and a first overlay instance 570. The executable node instance 560 comprises a base node instance 572 and an overlay manager 574. The overlay manager 574 maintains one or more runtime overlays such as the second runtime overlay 576 which comprises the second overlay template 578 and the second overlay instance 580. In the example shown in Figure 5B, the second overlay template 578 is owned by the base node template 562 (the skilled person will appreciate that this ownership relation exists but is not shown in Figure 5B for brevity).

The executable node instance 560 is associated with (i.e., is an instance of) the executable node template 558 and the base node instance 572 is associated with (i.e., is an instance of) the base node template 562. These relationships are indicated by the dashed connecting lines in Figure 5B. Moreover, the overlay manager 574 of the executable node instance 560 maintains a reference to the first runtime overlay 566 associated with the executable node template 558, if the executable node template 558 acts on instance information contained in the executable node instance 560. For example, the executable node template 558 may be an encryption overlay with the encryption defined by the first overlay template 568 and with specified encryption settings defined by the first overlay instance 570. In such an example, the first runtime overlay 566 is applied to the processing of attribute instances associated to the base node instance 572. Alternatively, if the first runtime overlay 566 acts only on the base node template 562 structure (void of a corresponding instance) then there is no need for the overlay manager 574 to hold a reference to the first runtime overlay 566.

The executable node template 558 and the executable node instance 560 dynamically extend the functionality of the base node template 562 and the base node instance 572 by associating the runtime overlays registered with the respective overlay managers with the base nodes (i.e., the base node template 562 and the base node instance 572). As will be described in more detail below, a runtime overlay is used to extend the functionality of a node to incorporate processing logic defined within the runtime overlay. Thus, the first runtime overlay 566 extends the functionality of the base node template 562 by incorporating processing logic, defined within the first runtime overlay 566, such that the processing logic interacts with the base node template 562 at runtime (e.g., for template building or processing performed outside of an associated node instance). Similarly, the second runtime overlay 576 extends the functionality of the base node instance 572 by incorporating processing logic, defined within the second runtime overlay 576, such that the processing logic interacts with the base node instance 572 and/or the base node template 562 at runtime. Here, processing logic corresponds to any suitable executable or interpretable code or software component. The processing logic may be expressed in a variety of software languages such as C, C++, Java, Ruby, Visual Basic, Python, and/or other object-oriented, procedural, or other programming language.

The executable node template 558 and the executable node instance 560 are dynamic structures which are generated during execution of a templated executable graph-based model. During execution, an overlay manager connected to an executable node template or instance is operable to receive and process stimuli (e.g., messages or events sent from other components within the system) and trigger the processing logic of one or more runtime overlays maintained by the overlay manager. The overlay manager of an executable node template handles template only stimuli or requests, whilst the overlay manager of an executable node instance handles instance only stimuli or requests.

The executable node template 558 may comprise one or more runtime overlays which are associated only with the base node template 562 and are not used or loaded for instance processing (i.e., they are not used or loaded with respect to the base node instance 572). As such, the overlay manager 564 may comprise a runtime overlay (not shown) which is not referenced by the overlay manager 574 of the executable node instance 560 but is used in the construction of the template definition. For example, the runtime overlay may be a validation overlay used to ensure that the base node template 562 is validly generated.

Each runtime overlay is itself a runtime node composed of a node template and a node instance which have an overlay node type. An overlay template is a node template having an overlay node type template and an overlay instance is a node instance which corresponds to a specific implementation of the overlay template (e.g., within the context of the runtime node 502 of Figure 5A, the node type template 512 of the node template 504 is an overlay type template and the node type instance 548 of the node instance 506 is an implementation of the overlay type template defined by the node type template 512). The overlay template comprises one or more generic rules which may be implemented by the processing logic of the overlay instance. For example, a rule may be defined in an overlay template specifying that hashing algorithm is to be used and an overlay instance related to the overlay template provides a specific implementation of a hashing algorithm (e.g., MD5, SHA-1, SHA-2, etc.). The overlay template itself may further comprise processing logic or derive additional data maintained by the overlay instance portion. As such, the overlay node type extends a node template or instance by allowing processing logic or additional data to be defined and linked to the node template or instance.

Figure 5C shows an executable runtime node 581 according to an embodiment of the present disclosure.

The executable runtime node 581 comprises a base runtime node 582 and an overlay manager 584. The base runtime node 582 corresponds to the runtime node 502 shown in Figure 5A and comprises a composition of the node template 504 and the node instance 506. The overlay manager 584 maintains one or more runtime overlays including a third runtime overlay 586 which comprises a third overlay template 588 and a third overlay instance 590.

The executable runtime node 581 is generated at runtime and dynamically extends the functionality of the base runtime node 582-i.e., the functionality of the node template 504 and/or the node instance 506-by associating the runtime overlays managed by the overlay manager 584 with the base runtime node 582. As such, the third runtime overlay 586 is operable to interact at runtime with the node template 504 and/or the node instance 506 of the base runtime node 582.

In the example shown in Figure 5C, the node template 504 and the node instance 506 are not executable nodes. That is, neither the node template 504 nor the node instance 506 comprise an overlay manager with one or more runtime overlays. However, as described in relation to Figure 5D below, the node template 504 and/or the node instance 506 may themselves be executable nodes thereby extending the functionality, complexity, and configurability of executable runtime nodes.

Figure 5D shows the executable runtime node 581 of Figure 5C but with one or more executable nodes within the base runtime node 582 according to an embodiment of the present disclosure.

The executable runtime node 581 comprises the base runtime node 582 and the overlay manager 584 as described above in relation to Figure 5C. However, as shown in Figure 5D, the base runtime node 582 comprises a composition of the executable node template 558 and the executable node instance 560 shown in Figure 5B. The executable runtime node 581 is generated at runtime and dynamically extends the functionality of the base runtime node 582-i.e., the functionality of the executable node template 558 and/or the executable node instance 560-by associating the runtime overlays managed by the overlay manager 584 with the base runtime node 582 (as shown in Figure 5C).

In general, an overlay template is defined independently of a node template or a node instance and may be associated with one or more node templates or node instances (i.e., based on configuration rules as described below). The corresponding overlay instance associated with each overlay template may also be defined as being created and owned by a node template or a node instance (i.e., based on configuration rules as described below). For example, an executable node template may comprise a runtime overlay which includes both an overlay template and an overlay instance (i.e., an implementation of the node template). In Figure 5D, this is illustrated by the first runtime overlay 566 which comprises both the first overlay template 568 and the first overlay instance 570. As will be described in more detail below, the runtime overlay in such a scenario may be limited to interacting with the structure and/or data of the base node template only (e.g., the base node template 562), or may interact with the structure and/or data of the base node instance (e.g., the base node instance 572). Alternatively, a node template may be associated with an overlay template, but the node instance is implemented or associated with a node instance. That is, the runtime overlay involving the node template is generated in conjunction with the node instance. In Figure 5D, this is illustrated by the second runtime overlay 576 which comprises the second overlay template 578 which is owned (associated) with the base node template 562, as indicated by the dashed arrow, and the second overlay instance 580 which is associated with the base node instance 572.

As such, the construction and generation of an executable runtime node and/or an executable node template based on an overlay template may depend on the specific configuration of the overlay template. More particularly, the creation and generation may depend on ownership relations of the overlay template, scope of processing of the overlay template, and/or association restrictions of the overlay template.

An overlay template may be either owned or shared. If the overlay template is owned by a node template, then the overlay template may only ever be associated with the node template. That is, the overlay template may only be included as part of a runtime overlay associated with an executable node template involving the node template as the base node template. In such a scenario, the overlay template may define specific processing logic or rules associated to the definition(s) provided in the node template which owns the overlay template. If the overlay template is shared, then it can be associated to zero or more node templates or node instances. In this scenario, the node template may have generic processing logic or rules not directly tied to any node template or node instance.

An overlay template may have scope of processing limited to act in relation to the node template, the node instance, or the runtime node (i.e., both the node template and the node instance). For example, if the overlay template is limited to act in relation to the node template, then the processing logic or rules of the overlay template cannot be used to interact with an executable node instance.

An overlay template (if shared) may be restricted to be associated with only node templates, node instances, or runtime nodes (i.e., both node templates and node instances). For example, if the overlay template is restricted to the node template, then a runtime overlay comprising the overlay template cannot be associated with a node instance. Similarly, an overlay template restricted to the node instance cannot be associated with a node template.

Figure 6 illustrates the concept of a hyperedge connecting two or more nodes through a defined set of roles according to an embodiment of the present disclosure.

Figure 6 shows a simplified representation of an edge node 602 which comprises an edge node type 604 (within the context of the example shown in Figure 4A, the edge node 602 corresponds to the node 402 where the node type 408 is the edge node type 446). The edge node type 604 may be alternatively referred to as a hyperedge node type such that the edge node 602 is alternatively referred to as a hyperedge node. The edge node type 604 comprises a plurality of roles which each define a connective relationship involving the edge node 602, e.g., a connective relationship between the edge node 602 and another node. The plurality of roles of the edge node type 604 comprises a first role node 606 and a role 608. The plurality of roles optionally comprises a further role in the form of a second role node 610. The first role node 606 is a node having a role node type (i.e., the role node type 447 shown in Figure 4A) and defines a connective relationship between the edge node 602 and a first node 612. The first role node 606 is owned by the edge node type 604. The role 608 defines a connective relationship between the edge node 602 and a second node 614. The second role node 610 is a node having the role node type and defines a relationship without expressly defining the node to which the edge connects. Whilst the example in Figure 6 shows the edge node type 604 having two, or even three, roles, the number of roles (and thus the number of connections) that an edge node type can have is not so limited.

As stated above, a role defines a connective relationship involving the edge node 602 (via the edge node type 604) and can be either a (standard) role, such as the role 608, or a role node, such as the first role node 606 or the second role node 610. The standard role simply defines a connective relationship between an edge node and another node. Thus, in the example shown in Figure 6, the role 608 defines the connection between the edge node 602 and the second node 614 (via the edge node type 604). A role node is a node having a role node type (i.e., the role node type 447 shown in Figure 4A) and, like the (standard) role, defines a connective relationship involving an edge. However, because a role node is a node, a role node gains the capabilities, functionality, and extensibility of a node (as described in relation to Figure 4A). A role node thus describes a potentially more complex connective relationship than a (standard) role. In the example shown in Figure 6, the first role node 606 defines a connective relationship between the edge node 602 and the first node 612 (via the edge node type 604). Beneficially, by utilizing the first role node 606 to define the connective relationship between the edge node 602 and the first node 612 the capabilities afforded to a node are provided to the first role node 606. For example, one or more overlay nodes can be associated with a role node to imbue the role node with processing logic thus allowing the role node to process data, respond to stimuli, etc. Moreover, a role node need not define a connective relationship to a node, as illustrated by the second role node 610. Because the second role node 610 is itself a node, the second role node 610 encompasses the data structures and functionality of a node thereby avoiding the need to define the connecting node directly.

The skilled person will appreciate that the above description of edges and roles is applicable to inference hyperedges (i.e., nodes having an inference hyperedge node type) and inference roles (i.e., roles which may have an inference role node type).

Having described the general structure of a system for implementing executable graph-based models, and having described the structure and functionality of nodes, overlays, templates, instances, and the like, the description will now turn to the integration of inference hypergraphs within an executable graph-based model.

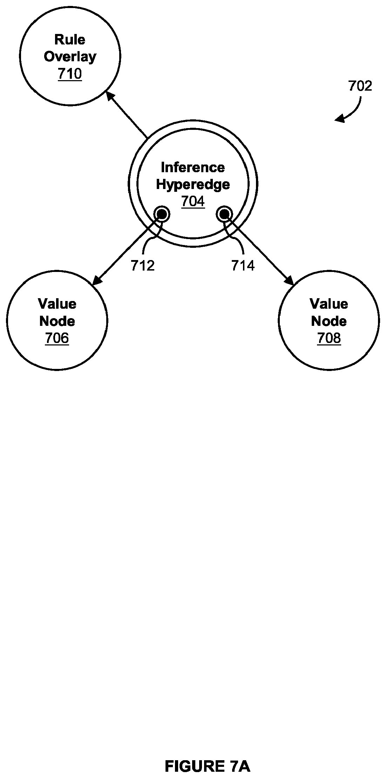

Figure 7A shows a portion of an executable inference hypergraph 702 representing a rule-based model.

The executable inference hypergraph 702 comprises a hyperedge 704, a first value node 706, a second value node 708, and a rule overlay node 710. The connective relationship between the hyperedge 704 and the first value node 706 is defined via a first role 712 and the connective relationship between the hyperedge 704 and the second value node 708 is defined via a second role 714. The hyperedge 704 is associated with an inference rule of the rule-based model and encapsulates a plurality of value nodes including the first value node 706 and the second value node 708. The plurality of value nodes store a plurality of values such that the plurality of values form a part of a set of terms used to evaluate the inference rule. The rule overlay node 710 is coupled to the hyperedge 704 thereby forming an executable inference rule (i.e., an executable node where the hyperedge 704 is the base node of the executable node). The rule overlay node 710 comprises processing logic operable to evaluate the inference rule using the set of terms encapsulated by the hyperedge 704.

In use, the executable inference hypergraph 702 is executed to determine an inference outcome. The execution of the executable inference hypergraph 702 includes an execution of the executable inference rule to evaluate the inference rule using the set of terms encapsulated by the hyperedge 704. The values stored within the first value node 706 and/or the second value node 708 can be set, or dynamically change, at run-time such that the executable inference hypergraph 702 defines the processing logic and overlay structure which is executed in-situ with domain specific data at run-time. Here, a value node (e.g., the first value node 706) is a node which at run-time stores a specific data item or value. For example, a value node may be a node having a value node type or a node having a specific attribute with an attribute value. As such, the skilled person will appreciate that references in the following description to value nodes is to be understood as referring to any suitable node within a graph-based model comprising a value or data item (e.g., a hyperedge which encapsulates other hyperedges and/or value nodes).

The portion of the executable inference hypergraph 702 shown in Figure 7A represents a single inference rule. As is known, an inference rule is a logical or mathematical principle for deriving conclusions based on information or data; that is, an inference rule specifies a way to infer a proposition or conclusion from one or more premises or statements. Typically, an inference rule comprises two components: a left-hand-side (LHS) and a right-hand-side (RHS). In forward chaining (where the goal is to derive new information or reach a specific conclusion based a set of inference rules and available data), the LHS of an inference rule represents a conditional statement (or antecedent) that, if true, trigger the rule to be invoked. The RHS of the inference rule represents the actions or outcomes that are taken when the conditional statement of the LHS is met. More formally, if $P$ represents the condition on the LHS, and $Q$ represents the action on the RHS, then the logical structure of an inference may be defined as $P \rightarrow Q$ (i.e., if $P$ is true, then $Q$ is true). Both the LHS and the RHS of an inference rule are composed of terms (alternatively referred to as components or elements). For example, in the rule "If NOT Pressure is above relief valve lift pressure and Relief valve has lifted, then Relief valve has opened early" the LHS (premise) has terms "Pressure above relief valve lift pressure" and "Relief valve has lifted", and the RHS (conclusion) has the term "Relief valve has opened early". In backward chaining (which starts with a goal or desired outcome and works backward to determine the conditions or data which must be true for that goal to be achieved), it can be concluded that if the RHS of an inference rule is true then the LHS of the inference rule must also be true. Continuing from the previous example, if the RHS (conclusion) is true-i.e., the relief valve has lifted early-then it can be concluded that the LHS (premise) must also be true-i.e., the pressure is not above relief valve lift pressure, and the relief valve has lifted.

The inference rule represented by the hyperedge 704 (alternatively referred to as an inference hyperedge, an inference node, or a rule hyperedge) is evaluated using the terms defined by the first value node 706 and the second value node 708 according to the rule overlay node 710. Since the hyperedge 704 has the roles, logical operation, and connection to the value nodes, the hyperedge 704 defines the inference rule scope. The rule overlay node 710 executes the inference rule by combing the information described by the hyperedge 704 because the rule overlay node 710 is what the inference engine (e.g., the inference engine module 348 of the system 300 in Figure 3) needs to find and invoke in its cyclic working storage (e.g., for a working session). That is, the inference engine module identifies all rules where the data is available and execute them, repeating this process until no new rules are identified. This process is cyclic since the execution of the inference rule of the hyperedge 704 can change the state of another hyperedge (thereby making rules dependencies which were not initially met, now met). Therefore, the overlay rule node 710 acts as a mechanism to invoke the inference rule and access the hyperedge information by the actual inference engine module (which only knows about rules and how to execute them). Consequently, the inference engine module does not need to understand the inference hypergraph, just know how to execute rules (rule overlay nodes) and whether they can be executed based on their dependent state being met. The rule outcome-i.e., the outcome of executing the inference rule-can be stored in the hyperedge 704 or in the rule overlay node 710, which triggers other inference rules (not shown) to be identified and executed.

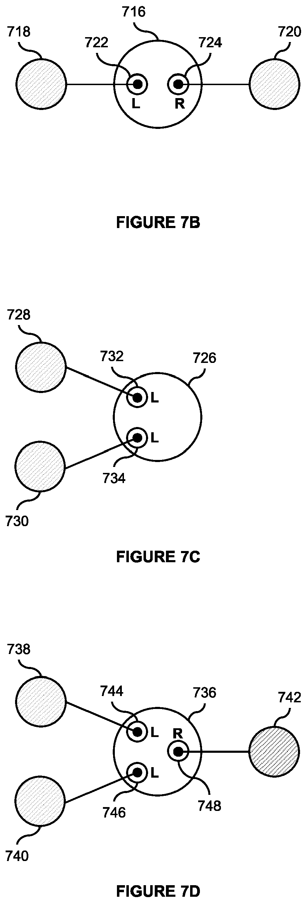

As such, the rule overlay node 710 defines the structure and logic of the inference rule and the value nodes provide the terms (values) to be used by the rule overlay node 710 to evaluate the inference rule. The first role 712 and the second role 714 assign the values of the first value node 706 and the second value node 708 respectively to either the LHS component or the RHS component of the inference rule. Value nodes may be assigned to roles associated with LHS or RHS components to realize different inference rule structured, as illustrated in Figures 7B-7D.

Figure 7B shows a hyperedge 716 which encapsulates a first value node 718 and a second value node 720. The first value node 718 is associated with a first role 722 of the hyperedge 716 and the second value node 720 is associated with a second role 724 of the hyperedge 716. The first role 722 assigns the first value node 718 to a term of the LHS component of the inference rule. The second role 724 assigns the second value node 720 to a term of the RHS component of the inference rule. The value of the first value node 718 is used to evaluate the condition on the LHS of the inference rule whilst the value of the second value node 720 forms a part of the action or consequent on the RHS of the inference rule. The exact manner in which the values are used are determined by the processing logic of a rule overlay node coupled to the hyperedge 716. For example, a rule overlay node may comprise processing logic implementing a simple rule where the value of the second value node 720 is returned if the LHS evaluates to True (e.g., if value of the first value node 718 is True, or if the value of the first value node 718 equals a certain value).

Figure 7C shows a hyperedge 726 which encapsulates a first value node 728 and a second value node 730. The first value node 728 is associated with a first role 732 of the hyperedge 726 and the second value node 730 is associated with a second role 734 of the hyperedge 726. Both the first role 732 and the second role 734 assign the first value node 728 and the second value node 730 to respective terms of the LHS component of the inference rule. As such, both the value of the first value node 728 and the value of the second value node 730 are used to evaluate the condition on the RHS of the inference rule. The terms used for the RHS component of the inference rule may be defined by a configuration of the hyperedge 726 (i.e., an attribute value) or by a rule overlay coupled to the hyperedge 726. For example, a rule overlay node may comprise processing logic implementing a rule where a value of True is returned (i.e., RHS) if the value of the first value node 728 is equal to the value of the second value node 730 (i.e., LHS).

Figure 7D shows a hyperedge 736 which encapsulates a first value node 738, a second value node 740, and a third value node 742. The first value node 738 is associated with a first role 744 of the hyperedge 736, the second value node 740 is associated with a second role 746 of the hyperedge 736, and the third value node 742 is associated with a third role 748 of the hyperedge 736. Both the first role 744 and the second role 746 assign the first value node 738 and the second value node 740 to respective terms of the LHS component of the inference rule, whilst the third role 748 assigns the third value node 742 to a term of the RHS component of the inference rule. Thus, the values of the first value node 738 and the second value node 740 are used to evaluate the condition on the LHS component of the inference rule and the value of the third value node 742 forms a part of the action or consequent on the RHS of the inference rule. The exact manner in which the values are used are determined by the processing logic of a rule overlay node coupled to the hyperedge 736. For example, a rule overlay node may comprise processing logic implementing a rule whereby the value of the third value node 742 is returned if the value of the first value node 738 is True and the value of the second value node 740 is True. As an alternative example, a rule overlay node may comprise processing logic implementing a rule whereby the value of the third value node 742 is returned if the value of the first value node 738 is equal to the value of the second value node 740.

As illustrated above, hyperedges can be configured to define the assignment of terms to components of the inference rule. A hyperedge may then be re-used across different inference rules defined by different rule overlay nodes with a given inference rule (rule overlay node) being executed at run-time depending on context. For example, a hyperedge may comprise a first rule overlay node associated with a first context and a second rule overlay node associated with a second context. A request to execute the hyperedge may be accompanied by an input context and the requisite rule overlay node executed based on a comparison between the input context and the context of the rule overlay nodes. Moreover, although an inference rule is defined once via a rule overlay node, they are executed for the inference session such that the state produced by execution of a rule overlay node is relative to the rule instance for the rule session and contexts.

To help illustrate the above concepts, the description will now turn to an example application of an inference hypergraph to medical image analysis and classification. The skilled person will appreciate that the present disclosure is not intended to be limited by such an application. Indeed, the systems and methods of the present disclosure are applicable to a range of different application areas and domains such as performing inference for rule-based and explainable fault diagnosis, system control (e.g., reactor control), autonomous vehicle control, safety critical systems, and the like.

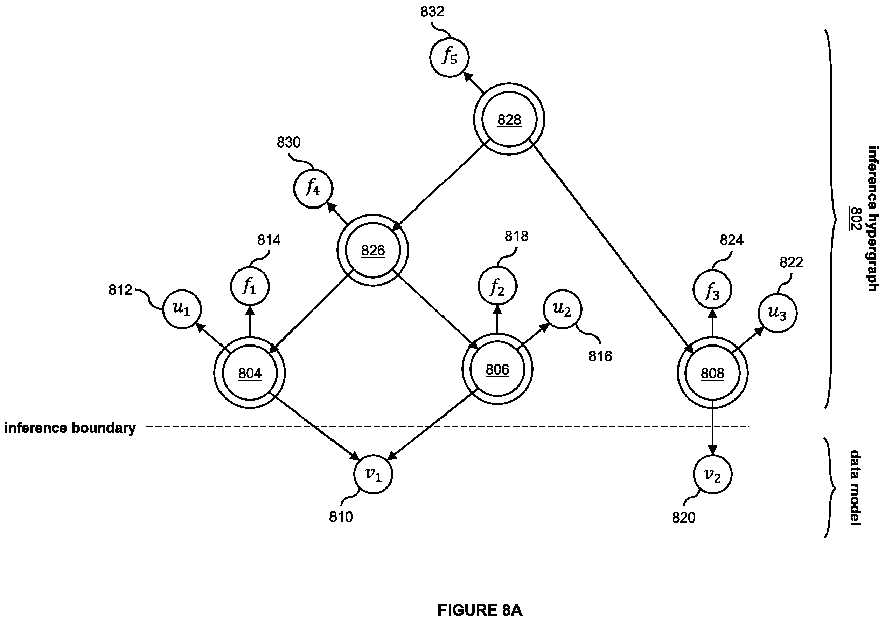

Figure 8A shows an executable graph-based model comprising an inference hypergraph 802 for meningioma subtype classification according to an embodiment of the present disclosure.

The executable graph-based model comprises the inference hypergraph 802 and a data model (e.g., nodes, value nodes, hyperedges, etc. of a graph-based model or an executable graph-based model). The skilled person will appreciate that the representations of nodes and hyperedges within Figure 8A have been simplified for brevity and ease of understanding. The inference hypergraph 802 comprises a first inference hyperedge 804, a second inference hyperedge 806, and a third inference hyperedge 808. The first inference hyperedge 804 encapsulates a first value node 810 and a second value node 812 and comprises a first rule overlay node 814 such that the first inference hyperedge 804 is an executable hyperedge (or executable inference hyperedge). The second inference hyperedge 806 encapsulates the first value node 810 and a third value node 816 and comprises a second rule overlay node 818 such that the second inference hyperedge 806 is an executable hyperedge (or executable inference hyperedge). The third inference hyperedge 808 encapsulates a fourth value node 820 and a fifth value node 822 and comprises a third rule overlay node 824 such that the third inference hyperedge 808 is an executable hyperedge (or executable inference hyperedge). The inference hypergraph 802 further comprises a first classification hyperedge 826 and a second classification hyperedge 828. The first classification hyperedge 826 encapsulates the first inference hyperedge 804 and the second inference hyperedge 806 and comprises a fourth rule overlay node 830 such that the first classification hyperedge 826 is an executable hyperedge (or executable inference hyperedge). The second classification hyperedge 828 encapsulates the third inference hyperedge 808 and the first classification hyperedge 826 and comprises a fifth rule overlay node 832 such that the second classification hyperedge 828 is an executable hyperedge (or executable inference hyperedge).

The inference hypergraph 802 shown in Figure 8A is for meningioma subtype classification from histology features. More particularly, the inference hypergraph 802 is for classifying a tumour as relating to a transitional subtype (WHO Grade 1) from morphology features extracted from a histopathology image of the tumour. The skilled person will appreciate that the rules represented by the inference hypergraph 802 shown in Figure 8A are purely for illustrative purposes and are not intended to cover the whole scope of meningioma subtype grading or classification. Indeed, other features and rule may be incorporated into the inference hypergraph 802 to improve the accuracy of classifications. The transitional subtype is one of the WHO Grade 1 meningioma variants which is characterized by a mix of meningothelial and fibroblastic features with prominent psammoma bodies (concentric lamellated calcified structures). The presence of round uniform cells is indicative of meningothelial features whilst spindle shaped cells are indicative of fibroblastic features. As such, a tumour may be coarsely graded as transitional by identifying both round and spindle shaped cells along with the presence of psammoma bodies.

The inference hypergraph 802 shown in Figure 8A performs transitional subtype classification based on values associated with the first value node 810 and the fourth value node 820. The first value node 810 is associated with the cell shape (i.e., round, spindle, or both) and the fourth value node 820 is associated with the presence of psammoma bodies within the tumour. The value stored by the first value node 810, $v_1$, is a binary indicator vector with the first value indicating the presence of round cells and the second value indicating the presence of spindle cell shapes. For example, a vector [1, 0] indicates that round shaped cells are present and a vector [1,1] indicates that both round and spindle shaped cells are present. The value stored by the fourth value node 820, $v_2$, is a binary value indicating the presence or absence of psammoma bodies (i.e., a value of "1" indicates presence and a value of "0" indicates absence). The skilled person will appreciate that the values stored in the first value node 810 and the fourth value node 820 may be set at run-time in order to perform transitional grading. For example, the first value node 810 and the fourth value node 820 may be communicatively coupled to one or more other nodes within the executable graph-based model which extract features from a histopathology image (e.g., a whole slide image) and determine the values to be stored in the first value node 810 and the fourth value node 820.

The first inference hyperedge 804 is a part of an executable inference rule which performs meningothelial classification (according to a meningothelial inference rule $f_1$) based on the first value node 810, the second value node 812, and the first rule overlay node 814. The second value node 812 comprises a predetermined value, $u_1$, which is indicative of round shaped cells being present (i.e., indicative of meningothelial features being present). For example, $u_1$ = [1,0]. The first value node 810 and the second value node 812 are associated with LHS roles of the first inference hyperedge 804 such that the values of both nodes are used to evaluate the conditional of the meningothelial inference rule. At run-time, the first rule overlay node 814 evaluates the meningothelial inference rule using the values of the first value node 810 and the second value node 812 (i.e., using the terms encapsulated by the first inference hyperedge 804). More particularly, the first rule overlay node 814 comprises processing logic implementing the meningothelial inference rule:

$$f_1(u_1, v_1) = \begin{cases} \text{True} & \text{if } (u_1 \wedge v_1) = u_1, \\ \text{False} & \text{otherwise} \end{cases}$$

That is, if the result of the logical AND operator applied at run-time to the values of the first value node 810 and the second value node 812 equals the predetermined value of the second value node 812, then the meningothelial inference rule evaluates to True, otherwise it evaluates to False. The outcome of the execution of the meningothelial inference rule is stored at run-time as an attribute value of an attribute of the first inference hyperedge 804. Additionally, or alternatively, the outcome of the execution of the meningothelial inference rule is stored at the first rule overlay node 814. In one embodiment, the first inference hyperedge 804 encapsulates one or more further value nodes such that the meningothelial inference rule is evaluated using additional terms (e.g., a determination of whether the cell boundaries are well defined, or a count of the number of round cells).

In one embodiment, further data and/or information is obtained if the first rule overlay node 814 is unable to evaluate the meningothelial inference rule. For example, if either or both of the values for the first value node 810 and the second value node 812 not been defined (or have been incorrectly defined). In such a situation, an additional term may be obtained and the meningothelial inference rule re-evaluated using the additional term. For example, a value for either or both of the missing values is obtained. The additional term may be obtained from a user (e.g., a user of the system 300 shown in Figure 3).

In one embodiment, the meningothelial inference rule is associated with a weight value indicative of a degree of certainty in the evaluation of the inference rule. The weight value may be static or dynamic. A static weight value is predetermined (or set during configuration prior to run-time) and indicates a known degree of certainty associated with the inference rule. For example, it may be known that if the conditional statement (LHS) of the meningothelial inference rule is met then the conclusion (RHS) follows with a predetermined degree of certainty (e.g., 0.8, 0.9, etc.). A dynamic weight value is determined as a result of values or context obtained at run-time. For example, if the conditional statement (LHS) of the meningothelial inference rule is determined based on a probability of the cells being round shaped (as opposed to a binary value), then the weight value may correspond to the probability.

The second inference hyperedge 806 is a part of an executable inference rule which performs fibroblastic classification (according to a fibroblastic inference rule $f_2$) based on the first value node 810, the third value node 816, and the second rule overlay node 818. The third value node 816 comprises a predetermined value, $u_2$, which is indicative of spindle shaped cells being present (i.e., indicative of fibroblastic features being present). For example, $u_2 = [0,1]$. The first value node 810 and the third value node 816 are associated with LHS roles of the second inference hyperedge 806 such that the values of both nodes are used to evaluate the conditional of the fibroblastic inference rule. At run-time, the second rule overlay node 818 evaluates the fibroblastic inference rule using the values of the first value node 810 and the third value node 816 (i.e., using the terms encapsulated by the second inference hyperedge 806). More particularly, the second rule overlay node 818 comprises processing logic implementing the fibroblastic inference rule:

$$f_2(u_2, v_1) = \begin{cases} \text{True} & \text{if } (u_2 \wedge v_1) = u_2, \\ \text{False} & \text{otherwise} \end{cases}$$

That is, if the result of the logical AND operator applied at run-time to the values of the first value node 810 and the third value node 816 equals the predetermined value of the third value node 816, then the fibroblastic inference rule evaluates to True, otherwise it evaluates to False. The outcome of the execution of the fibroblastic inference rule is stored at run-time as an attribute value of an attribute of the second inference hyperedge 806. Additionally, or alternatively, the outcome of the execution of the fibroblastic inference rule is stored at the second rule overlay node 818. In embodiments, the fibroblastic inference rule is associated with a weight value and/or further terms are obtained if the fibroblastic inference rule cannot be evaluated (as described in detail above in relation to the meningothelial inference rule).

The third inference hyperedge 808 is part of an executable inference rule which performs psammoma body classification (according to a psammoma inference rule $f_3$) based on the fourth value node 820, the fifth value node 822, and the third rule overlay node 824. Here, psammoma body classification is to be understood as determining whether psammoma bodies have been identified as being present within the tumour. The fifth value node 822 comprises a predetermined value, $u_3$, which is indicative of psammoma bodies being present. For example, $u_3 = \text{True}$. The fourth value node 820 and the fifth value node 822 are associated with LHS roles of the third inference hyperedge 808 such that the values of both nodes are used to evaluate the conditional of the psammoma inference rule. At run-time, the third rule overlay node 824 evaluates the psammoma inference rule using the values of the fourth value node 820 and the fifth value node 822 (i.e., using the terms encapsulated by the third inference hyperedge 808). More particularly, the third rule overlay node 824 comprises processing logic implementing the psammoma inference rule, $f_3(u_3, v_2) = (u_3 \wedge v_2)$. That is, if the result of the logical AND operator applied at run-time to the values of the fourth value node 820 and the fifth value node 822 evaluates to True, then the psammoma inference rule evaluates to True, otherwise it evaluates to False. The outcome of the execution of the psammoma inference rule is stored at run-time as an attribute value of an attribute of the third inference hyperedge 808. Additionally, or alternatively, the outcome of the execution of the psammoma inference rule is stored at the third rule overlay node 824. In embodiments, the psammoma inference rule is associated with a weight value and/or further terms are obtained if the psammoma inference rule cannot be evaluated (as described in detail above in relation to the meningothelial inference rule).

The first classification hyperedge 826 is part of an executable inference rule which determines if both meningothelial and fibroblastic features are present. The first classification hyperedge 826 encapsulates the first inference hyperedge 804 and the second inference hyperedge 806 such that the outcomes of the meningothelial inference rule and the fibroblastic inference rule are incorporated as terms used by the fourth rule overlay node 830 to evaluate the inference rule of the first classification hyperedge 826. That is, the fourth rule overlay node 830 comprises processing logic implementing the inference rule $f_4(f_1, f_2) = (f_1 \wedge f_2)$. The skilled person will appreciate that $f_1$ and $f_2$ are here used as shorthand for the outcomes of the meningothelial and fibroblastic inference rules as evaluated at run-time by the first rule overlay node 814 and the second rule overlay node 818 respectively. The outcome of the execution of the inference rule is stored at run-time as an attribute value of an attribute of the first classification hyperedge 826. Additionally, or alternatively, the outcome of the execution of the inference rule is stored at the fourth rule overlay node 830. In embodiments, the inference rule of the first classification hyperedge 826 is associated with a weight value and/or further terms are obtained if the inference rule cannot be evaluated (as described in detail above in relation to the meningothelial inference rule). The weight value (or inference certainty) may be indicative of a combined degree of certainty in an evaluation of one or more inference rules of the inference hypergraph 802. For example, the inference certainty for the inference rule of the first classification hyperedge 826 may be based on, or a combination of, the certainty values (weight values) of the meningothelial inference rule and the fibroblastic inference rule.

The second classification hyperedge 828 is part of an executable inference rule which determines if both meningothelial and fibroblastic features are present (according to the outcome of the first classification hyperedge 826) and psammoma bodies are present (according to the outcome of the third inference hyperedge 808). The second classification hyperedge 828 encapsulates the first classification hyperedge 826 and the third inference hyperedge 808 such that the outcomes of the inference rule of the first classification hyperedge 826 and the psammoma inference rule are incorporated as terms used by the fifth rule overlay node 832 to evaluate the inference rule of the second classification hyperedge 828. That is, the fifth rule overlay node 832 comprises processing logic implementing the inference rule $f_5(f_3, f_4) = (f_3 \wedge f_4)$. The skilled person will appreciate that $f_3$ and $f_4$ are here used as shorthand for the outcomes of the psammoma inference rule and the inference rule of the first classification node 826 as evaluated at run-time by the third rule overlay node 824 and the fourth rule overlay node 830 respectively. The outcome of the execution of the inference rule is stored at run-time as an attribute value of an attribute of the second classification hyperedge 828. Additionally, or alternatively, the outcome of the execution of the inference rule is stored at the fifth rule overlay node 832. In embodiments, the inference rule of the second classification hyperedge 828 is associated with a weight value and/or further terms are obtained if the inference rule cannot be evaluated (as described in detail above in relation to the meningothelial inference rule). The weight value (or inference certainty) may be indicative of a combined degree of certainty in an evaluation of one or more inference rules of the inference hypergraph 802. For example, the inference certainty for the inference rule of the second classification hyperedge 828 may be based on, or a combination of, the certainty values (weight values) of the psammoma inference rule and the inference rule of the first classification hyperedge 826. In one embodiment, the inference certainty is output and/or stored alongside the inference outcome (i.e., the outcome of the execution of the inference rule).

The inference hypergraph 802 is executable at run-time to obtain an inference outcome-i.e., a classification based on the values held in the first value node 810 and the fourth value node 820. For example, a binary vector [1,1] is stored at the first value node 810 and a binary value "1" is stored at the fourth value node 820.

A trigger is then received requesting to perform an inference using the executable inference hypergraph 802 shown in Figure 8A. In response to the trigger being received, the executable inference hypergraph 802 is executed to determine an inference outcome. Execution of the inference hypergraph 802 includes an execution or evaluation of the executable inference rule associated with the first inference hyperedge 804 (i.e., execution of processing logic of the first rule overlay node 814) and an execution/evaluation of the executable inference rule associated with the second inference hyperedge 806 (i.e., execution of processing logic of the second rule overlay node 818) using the terms encapsulated by the inference hyperedges as discussed above. As a result, the inference outcome values "1" and "1" are stored as attribute values at the first inference hyperedge 804 and the second inference hyperedge 808 respectively. The executable inference rule associated with the third inference hyperedge 808 is executed/evaluated (i.e., processing logic of the third rule overlay node 824 is executed) using the terms encapsulated by the third inference hyperedge 808 as described above. The resulting inference outcome value "1" is then stored as an attribute value at the third inference hyperedge 808. The executable inference rule associated with the first classification hyperedge 826 is executed or evaluated (i.e., processing logic of the fourth rule overlay node 830 is executed) using the terms encapsulated by the first classification hyperedge 826 (as described above) and the resulting inference outcome value of "1" is stored as an attribute value at the first classification hyperedge 826. Finally, the executable inference rule associated with the second classification hyperedge 828 is executed or evaluated (i.e., processing logic of the fifth rule overlay node 832 is executed) using the term encapsulated by the second classification hyperedge 828, as described above. The resulting inference outcome value of "1" is stored as an attribute value at the second classification hyperedge 828 and/or provided as the inference output in response to the trigger.

In one embodiment, the executable inference rules are executed according to a configuration of the inference hypergraph 802 which defines the ordering of the executable inference rules to obtain an inference outcome corresponding to a transitional grading classification. Alternatively, the executable inference rules are executed in an order determined according to a bottom up tree traversal from the leaf nodes-i.e., the first inference hyperedge 804, the second inference hyperedge 806, and the third inference hyperedge 808-to the root node-i.e., the second classification hyperedge 828. Alternatively, the executable inference rules are executed in an order determined according to a postorder traversal of the inference hypergraph 802. It is to be noted that a postorder traversal is performed due to the dependencies of the hierarchy of hyperedges within the inference hypergraph 802 because an inference engine (e.g., the inference engine module 348 of the system 300 shown in Figure 3) executes inference rules in which the hyperedge's dependencies are met. If there are no inference rules to evaluate due to dependencies, then inference execution is stopped until there are rules to execute again. This therefore forms a cyclic execution which may lead to multiple stimulus and contract calls.

A postorder traversal forms a functional composition of the executable inference rules such that the final inference outcome is calculated as

$$f_5\left(f_4\big(f_1(u_1, v_1), f_2(u_2, v_1)\big), f_3(u_3, v_2)\right).$$

The inference outcome-i.e., the inference outcome produced as a result of executing the inference rule of the second classification hyperedge 828-can be stored in a value or attribute of the data model (executable graph-based model) thereby performing in-situ processing.

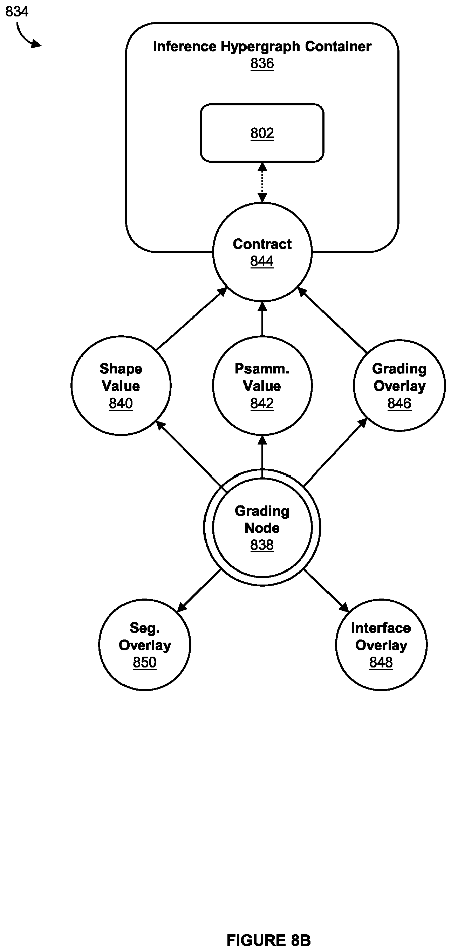

Figure 8B illustrates how the inference hypergraph 802 of Figure 8A may be incorporated within an executable graph-based model 834 according to an embodiment of the present disclosure.

The executable graph-based model 834 comprises an inference hypergraph container 836 which encapsulates the inference hypergraph 802. The executable graph-based model 834 further comprises a grading node 838, a shape value node 840, a psammoma value node 842, and a contract node 844. The grading node 838 is an executable node comprising a grading overlay node 846, an interface overlay node 848, and a segmentation overlay node 850. The skilled person will appreciate that the executable graph-based model 834 may correspond to a portion or sub-model of a larger executable graph-based model for performing histopathology image analysis and classification (e.g., the larger executable graph-based model may comprise further inference hypergraphs for performing other gradings such as Grade II or Grade III subtype classification).

The contract node 844 provides an interface between the grading node 838 and the inference hypergraph 802. That is, the contract node 844 provides a first node mapping between the shape value node 840 and the first inference hyperedge 804 of the inference hypergraph 802, a second node mapping between the psammoma value node 842 and the second inference hyperedge 806 of the inference hypergraph 802, a third mapping between the psammoma value node 842 and the third inference hyperedge 808 of the inference hypergraph 802, and an attribute mapping between the second classification hyperedge 828 of the inference hypergraph 802 and the grading node 838. As such, the shape value node 840 and the psammoma value node 842 may be considered to be the same as the first value node 810 and the fourth value node 820 shown in Figure 8A. The node mappings of the contract node 844 directly map the shape value node 840 and the psammoma value node 842 to the respective roles of the first inference hyper-

edge 804 and the second inference hyperedge 806 respectively. The attribute mapping of the contract node 844 directly maps the outcome of the inference performed by the second classification hyperedge 828 to an attribute value of a classification outcome attribute of the grading node 838.

The grading overlay node 846 comprises processing logic operable to perform meningioma subtype classification grading utilizing the inference hypergraph 802. At run-time a stimulus is received by the grading overlay node 846 associated with a request to perform transitional subtype grading. In response, the grading overlay node 846 fires a stimulus which is received by the interface overlay node 848. The interface overlay node 848 comprises processing logic operable to obtain a whole slide image (WSI) of a meningioma biopsy for further processing, segmentation, and classification. For example, the interface overlay node 848 may comprise processing logic which obtains a WSI from a microscope or a persistent storage location. Once obtained, the WSI is stored as an attribute value of a respective attribute of the grading node 838. The grading overlay node 846 then fires a further stimulus which is received by the segmentation overlay node 850. The segmentation overlay node 850 performs image segmentation on the WSI obtained by the interface overlay node 848 and determines values for the shape value node 840 and the psammoma value node 842 based on the segmentation. The skilled person will appreciate that the exact segmentation and analysis methods performed by the segmentation overlay node 850 is not limited and any suitable approach may be utilized to estimate the binary vector and binary value for the two value nodes (as described above).

In response to the values for the shape value node 840 and the psammoma value node 842 being set the grading overlay node 846 executes the contract node 844 thereby causing the inference hypergraph 802 to be executed to determine an inference outcome. Upon receiving the inference outcome from the contract node 844, the grading overlay node 846 stores the inference outcome at the grading node 838 (e.g., as an attribute value of a relevant attribute).

Figure 9 shows a method 900 according to an embodiment of the present disclosure.

The method 900 comprises the steps of identifying 902 a graph-based model, identifying 904 an executable inference hypergraph, receiving 906 a trigger, and executing 908 the executable inference hypergraph. The method 900 further comprises, as part of executing 908 the executable inference hypergraph, the optional steps of comparing 910 a weight value to a threshold certainty value and obtaining 912 an additional term when the weight value does not satisfy the threshold certainty value. In one embodiment, the method 900 is carried out by a system such as the system 300 described above in relation to Figure 3.

At the step of identifying 902, a graph-based model comprising one or more value nodes storing one or more values is identified. The graph-based model may be an executable graph-based model (e.g., the executable graph-based model 834 shown in Figure 8B which comprises the shape value node 840 and the psammoma value node 842).

At the step of identifying 904, an executable inference hypergraph is identified. The executable inference hypergraph represents a rule-based model. The executable inference hypergraph comprises a first hyperedge associated with a first inference rule of the rule-based model. The first hyperedge encapsulates a plurality of value nodes storing a plurality of values such that the plurality of values form a part of a set of terms used to evaluate the first inference rule. The plurality of value nodes include at least one of the one or more value nodes of the graph-based model. The executable inference hypergraph further comprises a rule overlay node coupled to the first hyperedge thereby forming a first executable inference rule. The rule overlay node comprises processing logic operable to evaluate the first inference rule using the set of terms encapsulated by the first hyperedge.

For example, in Figure 8A the inference hypergraph 802 (which is an executable inference hypergraph) comprises the first inference hyperedge 804 which encapsulates the first value node 810 (which is a part of the data model, or graph-based model, as shown in Figure 8B) and the second value node 812. The first inference hyperedge 804 is coupled with the first rule overlay node 814 thereby forming an executable inference rule which is evaluated by the first rule overlay node 814 using the first value node 810 and the second value node 812 (i.e., the terms) encapsulated by the first inference hyperedge 804.

In one embodiment, the inference hypergraph is generated from an inference hypergraph template. That is, the inference hypergraph is a run-time inference hypergraph comprising the inference hypergraph template and an inference hypergraph instance generated from the inference hypergraph template.

Nodes are associated with hyperedges within an inference hypergraph according to roles. For example, a first value node of the plurality of value nodes may be assigned to a first role of the first hyperedge and a second value node of the plurality of value nodes is assigned to a second role of the first hyperedge. The first role associates the first value node with a first side of the first inference rule (e.g., the left-hand-side) and the second role associates the second value node with a second side of the first inference rule (e.g., the right-hand-side). The left-hand-side (LHS) of the inference rule is associated with a conditional statement and the right-hand-side (RHS) of the inference rule is associated with an outcome of the conditional statement. Both the LHS and the RHS of an inference rule are composed of terms (alternatively referred to as components or elements). For example, in the rule "If Temperature is above maximum working range then Component has overheated", the LHS (premise) has the term "Temperature is above maximum working range" and the RHS (conclusion) has the term "Component has overheated". The first inference rule implemented by the processing logic of the rule overlay node may output a Boolean value based on a comparison of values of a first of the plurality of value nodes and a second of the plurality of value nodes (e.g., as shown in Figure 7C). In one embodiment, the first hyperedge further encapsulates a third value node which is assigned to the first role of the first hyperedge and the first inference rule implemented by the processing logic of the rule overlay node outputs a value of the second value node based on a satisfaction of the conditional statement involving values of the first value node and the third value node (e.g., as shown in Figure 7D). Further examples of the couplings of nodes to LHS and RHS roles are illustrated in Figures 7A-7D as described above.

The first value node may be the at least one of the one or more value nodes of the graph-based model and the second value node may be a target value node (e.g., the first value node 810 in Figure 8A is a part of the data model, or graph-based model, and the second value node 812 is a target value node defined as part of the inference hypergraph 802).

In one embodiment, the first hyperedge encapsulates a second hyperedge associated with a second inference rule of the rule-based model. For example, in the inference hypergraph 802 shown in Figure 8A, the first classification hyperedge 826 associated with an inference rule encapsulates the first inference hyperedge 804 associated with the meningothelial inference rule. As stated in detail above, the set of terms used to evaluate the inference rule of the first classification hyperedge 826 include an outcome value of the meningothelial inference rule.

At the step of receiving 906, a trigger related to a request to perform an inference using the executable inference hypergraph is received. The trigger may correspond to a stimulus fired within the executable graph-based model (e.g., fired from a node or overlay node within the executable graph-based model). Alternatively, the trigger may correspond to an external request to perform the inference (e.g., a request received from outside the system 300 shown in Figure 3, such as the stimuli 340 and associated context 336).

At the step of executing 908, the executable inference hypergraph is executed in response to the trigger being received to determine an inference outcome. Execution of the executable inference hypergraph includes an execution of the first executable inference rule to evaluate the first inference rule using the set of terms encapsulated by the first hyperedge.

In one embodiment, the first hyperedge further comprises a further overlay node comprising processing logic operable to evaluate the first inference rule. The first overlay node is associated with a first context and the further overlay node is associated with a second context such that the first executable inference rule is executed based on a received context which matches the second context.

The first inference rule may further output a weight value indicative of a degree of certainty in an evaluation of the first inference rule. Execution of the executable inference hypergraph may further determine an inference certainty indicative of a combined degree of certainty in an evaluation of one or more inference rules of the executable inference hypergraph.

In one embodiment, the step of executing 908 further comprises the steps of comparing 910 the weight value to a threshold certainty value and, when the weight value does not satisfy the threshold certainty value, obtaining 912 an additional term such that the first inference rule is re-evaluated using the set of terms and the additional term. The additional term may be obtained from a knowledge base or database, or the additional term may be obtained from a user (e.g., a user of the system 300 shown in Figure 3).

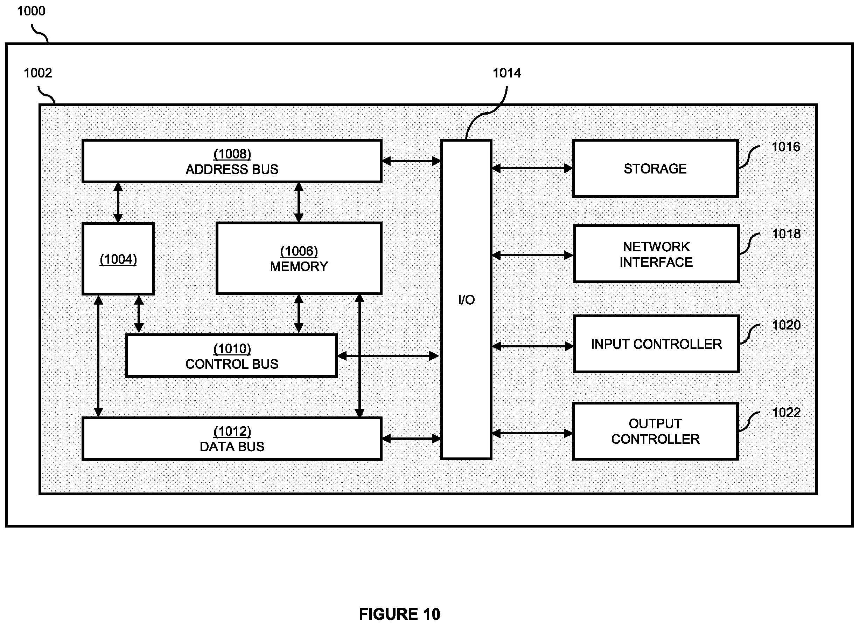

Figure 10 shows an example computing system for carrying out the methods of the present disclosure. Specifically, Figure 10 shows a block diagram of an embodiment of a computing system according to example embodiments of the present disclosure.

Computing system 1000 can be configured to perform any of the operations disclosed herein such as, for example, any of the operations discussed with reference to the functional modules described in relation to Figure 3. The computing system 1000 can be implemented as a conventional computer system, an embedded controller, a laptop, a server, a mobile device, a smartphone, a set-top box, a kiosk, a vehicular information system, one or more processors associated with a television, a customized machine, any other hardware platform, or any combination or multiplicity thereof. In one embodiment, the computing system 1000 is a distributed system configured to function using multiple computing machines interconnected via a data network or bus system.

The computing system 1000 includes one or more computing device(s) 1002. The one or more computing device(s) 1002 of computing system 1000 comprise one or more processors 1004 and memory 1006. One or more processors 1004 can be any general purpose processor(s) configured to execute a set of instructions. For example, one or more processors 1004 can be a processor core, a multiprocessor, a reconfigurable processor, a microcontroller, a digital signal processor ("DSP"), an application-specific integrated circuit ("ASIC"), a graphics processing unit ("GPU"), a neural processing unit ("NPU"), an accelerated processing unit ("APU"), a brain processing unit ("BPU"), a data processing unit ("DPU"), a holographic processing unit ("HPU"), an intelligent processing unit ("IPU"), a microprocessor/microcontroller unit ("MPU/MCU"), a radio processing unit ("RPU"), a tensor processing unit ("TPU"), a vector processing unit ("VPU"), a wearable processing unit ("WPU"), a field programmable gate array ("FPGA"), a programmable logic device ("PLD"), a controller, a state machine, gated logic, discrete hardware component, any other processing unit, or any combination or multiplicity thereof. In one embodiment, one or more processors 1004 include one processor. Alternatively, one or more processors 1004 include a plurality of processors that are operatively connected. For example, the one or more processors 1004 can be multiple processing units, a single processing core, multiple processing cores, special purpose processing cores, co-processors, or any combination thereof. One or more processors 1004 are communicatively coupled to memory 1006 via address bus 1008, control bus 1010, and data bus 1012.

Memory 1006 can include non-volatile memories such as read-only memory ("ROM"), programable read-only memory ("PROM"), erasable programmable read-only memory ("EPROM"), flash memory, or any other device capable of storing program instructions or data with or without applied power. The memory 1006 can also include volatile memories, such as random-access memory ("RAM"), static random-access memory ("SRAM"), dynamic random-access memory ("DRAM"), and synchronous dynamic random-access memory ("SDRAM"). The memory 1006 can comprise single or multiple memory modules. While the memory 1006 is depicted as part of the one or more computing device(s) 1002, the skilled person will recognize that the memory 1006 can be separate from the one or more computing device(s) 1002.

Memory 1006 can store information that can be accessed by one or more processors 1004. For instance, memory 1006 (e.g., one or more non-transitory computer-readable storage mediums, memory devices) can include computer-readable instructions (not shown) that can be executed by one or more processors 1004. The computer-readable instructions can be software written in any suitable programming language or can be implemented in hardware. Additionally, or alternatively, the computer-readable instructions can be executed in logically and/or virtually separate threads on one or more processors 1004. For example, memory 1006 can store instructions (not shown) that when executed by one or more processors 1004 cause one or more processors 1004 to perform operations such as any of the operations and functions for which computing system 1000 is configured, as described herein. In addition, or alternatively, memory 1006 can store data (not shown) that can be obtained, received, accessed, written, manipulated, created, and/or stored. The data can include, for instance, the data and/or information described herein in relation to Figures 1 to 14. In some implementations, the one or more computing device(s) 1002 can obtain from and/or store data in one or more memory device(s) that are remote from the computing system 1000.

The one or more computing device(s) 1002 further comprise I/O interface 1014 communicatively coupled to address bus 1008, control bus 1010, and data bus 1012. The I/O interface 1014 is configured to couple to one or more external devices (e.g., to receive and send data from/to one or more external devices). Such external devices, along with the various internal devices, may also be known as peripheral devices. The I/O interface 1014 may include both electrical and physical connections for operably coupling the various peripheral devices to the one or more computing device(s) 1002. The I/O interface 1014 may be configured to communicate data, addresses, and control signals between the peripheral devices and the one or more computing device(s) 1002. The I/O interface 1014 may be configured to implement any standard interface, such as a small computer system interface("SCSI"), serial-attached SCSI ("SAS"), fiber channel, peripheral component interconnect ("PCI"), PCI express ("PCIe"), serial bus, parallel bus, advanced technology attachment ("ATA"), serialATA ("SATA"), universal serial bus ("USB"), Thunderbolt, FireWire, various video buses, and the like. The I/O interface 1014 is configured to implement only one interface or bus technology. Alternatively, the I/O interface 1014 is configured to implement multiple interfaces or bus technologies. The I/O interface 1014 may include one or more buffers for buffering transmissions between one or more external devices, internal devices, the one or more computing device(s), or the one or more processors 1004. The I/O interface 1014 may couple the one or more computing device(s) 1002 to various input devices, including mice, touch screens, scanners, biometric readers, electronic digitizers, sensors, receivers, touchpads, trackballs, cameras, microphones, keyboards, any other pointing devices, or any combinations thereof. The I/O interface 1014 may couple the one or more computing device(s) 1002 to various output devices, including video displays, speakers, printers, projectors, tactile feedback devices, automation control, robotic components, actuators, motors, fans, solenoids, valves, pumps, transmitters, signal emitters, lights, and so forth.

Computing system 1000 further comprises storage unit 1016, network interface 1018, input controller 1020, and output controller 1022. Storage unit 1016, network interface 1018, input controller 1020, and output controller 1022 are communicatively coupled to the central control unit (i.e., the memory 1006, the address bus 1008, the control bus 1010, and the data bus 1012) via I/O interface 1014. The network interface 1018 communicatively couples the computing system 1000 to one or more networks such as wide area networks ("WAN"), local area networks ("LAN"), intranets, the Internet, wireless access networks, wired networks, mobile networks, telephone networks, optical networks, or combinations thereof. The network interface 1018 may facilitate communication with packet switched networks or circuit switched networks which use any topology and may use any communication protocol. Communication links within the network may involve various digital or analog communication media such as fiber optic cables, free-space optics, waveguides, electrical conductors, wireless links, antennas, radio-frequency communications, and so forth.

Storage unit 1016 is a computer readable medium, preferably a non-transitory computer readable medium, comprising one or more programs, the one or more programs comprising instructions which when executed by the one or more processors 1004 cause computing system 1000 to perform the method steps of the present disclosure. Alternatively, storage unit 1016 is a transitory computer readable medium. Storage unit 1016 can include a hard disk, a floppy disk, a compact disc read-only memory ("CD-ROM"), a digital versatile disc ("DVD"), a Blu-ray disc, a magnetic tape, a flash memory, another non-volatile memory device, a solid-state drive ("SSD"), any magnetic storage device, any optical storage device, any electrical storage device, any semiconductor storage device, any physical-based storage device, any other data storage device, or any combination or multiplicity thereof. In one embodiment, the storage unit 1016 stores one or more operating systems, application programs, program modules, data, or any other information. The storage unit 1016 is part of the one or more computing device(s) 1002. Alternatively, the storage unit 1016 is part of one or more other computing machines that are in communication with the one or more computing device(s) 1002, such as servers, database servers, cloud storage, network attached storage, and so forth.

## Claims

1. A system comprising:
   a memory storing:

   > a graph-based model comprising one or more value nodes storing one or more values; and
   > an executable inference hypergraph representing a rule-based model, wherein the executable inference hypergraph comprises:

   >> a first hyperedge associated with a first inference rule of the rule-based model and encapsulating a plurality of value nodes storing a plurality of values such that the plurality of values form a part of a set of terms used to evaluate the first inference rule, wherein the plurality of value nodes include at least one of the one or more value nodes of the graph-based model; and
   >> a rule overlay node coupled to the first hyperedge thereby forming a first executable inference rule, wherein the rule overlay node comprises processing logic operable to evaluate the first inference rule using the set of terms encapsulated by the first hyperedge; and
   >> processing circuitry coupled to the memory and configured to:

   >>> receive a trigger related to a request to perform an inference using the executable inference hypergraph; and

in response to the trigger being received, execute the executable inference hypergraph to determine an inference outcome, wherein execution of the executable inference hypergraph includes an execution of the first executable inference rule to evaluate the first inference rule using the set of terms encapsulated by the first hyperedge.

2. The system of claim 1 wherein the first hyperedge further encapsulates a second hyperedge associated with a second inference rule of the rule-based model.

3. The system of claim 2 wherein the set of terms used to evaluate the first inference rule include an outcome value of the second hyperedge or the second inference rule of the second hyperedge.

4. The system of claim 1 wherein the first inference rule implemented by the processing logic of the rule overlay node outputs a Boolean value based on a comparison of values of a first of the plurality of value nodes and a second of the plurality of value nodes.

5. The system of claim 1 wherein a first value node of the plurality of value nodes is assigned to a first role of the first hyperedge and a second value node of the plurality of value nodes is assigned to a second role of the first hyperedge, wherein the first role associates the first value node with a first side of the first inference rule and the second role associates the second value node with a second side of the first inference rule.

6. The system of claim 5 wherein the first value node is the at least one of the one or more value nodes of the graph-based model and the second value node is a target value node.

7. The system of claim 5 wherein the first side is a left-hand-side (LHS) of the first inference rule and the second side is a right-hand-side (RHS) of the first inference rule.

8. The system of claim 7 wherein the LHS of the first inference rule is associated with a conditional statement and the RHS of the first inference rule is associated with an outcome of the conditional statement.

9. The system of claim 8 wherein the first hyperedge further encapsulates a third value node which is assigned to the first role of the first hyperedge.

10. The system of claim 1 wherein the first executable inference rule comprises a further overlay node comprising processing logic operable to evaluate the first inference rule, wherein the overlay node is associated with a first context and the further overlay node is associated with a second context.

11. The system of claim 10 wherein the executable inference hypergraph is executed according to a received context such that the first executable inference rule is executed based on the received context.

12. The system of claim 11 wherein the overlay node is executed when the first context matches the received context and the further overlay node is executed when the second context matches the received context.

13. The system of claim 1 wherein the memory further stores an inference hypergraph template from which the executable inference hypergraph is generated.

14. A method comprising:

identifying, using processing circuitry, a graph-based model comprising one or more value nodes storing one or more values;
identifying, using the processing circuitry, an executable inference hypergraph representing a rule-based model, wherein the executable inference hypergraph comprises a first hyperedge associated with a first inference rule of the rule-based model and encapsulating a plurality of value nodes storing a plurality of values such that the plurality of values form a part of a set of terms used to evaluate the first inference rule, wherein the plurality of value nodes include at least one of the one or more value nodes of the graph-based model, and a rule overlay node coupled to the first hyperedge thereby forming a first executable inference rule, wherein the rule overlay node comprises processing logic operable to evaluate the first inference rule using the set of terms encapsulated by the first hyperedge;
receiving, by the processing circuitry, a trigger related to a request to perform an inference using the executable inference hypergraph; and
in response to the trigger being received, executing, by the processing circuitry, the executable inference hypergraph to determine an inference outcome, wherein execution of the executable inference hypergraph includes an execution of the first executable inference rule to evaluate the first inference rule using the set of terms encapsulated by the first hyperedge.

15. A non-transitory computer readable medium including instructions which, when executed by processing circuitry, cause the processing circuitry to:

identify a graph-based model comprising one or more value nodes storing one or more values;

identify an executable inference hypergraph representing a rule-based model, wherein the executable inference hypergraph comprises a first hyperedge associated with a first inference rule of the rule-based model and encapsulating a plurality of value nodes storing a plurality of values such that the plurality of values form a part of a set of terms used to evaluate the first inference rule, wherein the plurality of value nodes include at least one of the one or more value nodes of the graph-based model, and a rule overlay node coupled to the first hyperedge thereby forming a first executable inference rule, wherein the rule overlay node comprises processing logic operable to evaluate the first inference rule using the set of terms encapsulated by the first hyperedge;

receive a trigger related to a request to perform an inference using the executable inference hypergraph; and

in response to the trigger being received, execute the executable inference hypergraph to determine an inference outcome, wherein execution of the executable inference hypergraph includes an execution of the first executable inference rule to evaluate the first inference rule using the set of terms encapsulated by the first hyperedge.

PRIOR ART

100

```
┌─────────────────────────────────────┐
│         Presentation Layer          │
│                102                  │
└─────────────────────────────────────┘
              ↑↓
┌─────────────────────────────────────┐
│        Processing Logic Layer       │
│                104                  │
└─────────────────────────────────────┘
              ↑↓
┌─────────────────────────────────────┐
│          Data Access Layer          │
│                106                  │
└─────────────────────────────────────┘
              ↑↓
┌─────────────────────────────────────┐
│           Database Layer            │
│                108                  │
└─────────────────────────────────────┘
```

**FIGURE 1**

**FIGURE 2**

Configuration
334

Context
336

Data/Information
338

Stimuli
340

Network
342

Outcome
344

System
300

Interface
Module
304

Executable Graph-Based Model
302

Controller
Module
306

Data/
Information
Management
Module
314

Security
Module
322

Analytics
Module
332

Transaction
Module
308

Overlay
Management
Module
316

Visualization
Module
324

Template
Management
Module
346

Context
Module
310

Memory
Management
Module
318

Interaction
Module
326

Administration
Module
328

Inference
Engine
Module
348

Stimuli
Management
Module
312

Storage
Management
Module
320

Operations
Module
330

Contract
Management
Module
350

FIGURE 3

**Predetermined Node Types** 440

442 444 446 447 448 449 450 451

**Node** 402

**Node Type** 408

**Metadata** 412

**Inheritance Identifiers** 406

430 432 434

**Attributes** 410

**Scopes** 454

**Scope** 452

**Node Configuration** 414

**Node Configuration Strategy** 436

**Node Configuration Extension** 438

**Properties** 404

416 418 420 422 424 426 428

**FIGURE 4A**

EP 4 425 361 A1

**Executable Node**
456

**Base Node**
458

**Overlay Manager**
460

**Overlay**
462

**Overlay**
464

**Overlay Type**
466

**Overlay Type**
468

**FIGURE 4B**

**Executable Node**
**488**

**Overlay Manager**
**490**

**Overlay**
**494**

**Node**
**489**

**Attributes**
**492**

**Attribute**
**496**

**Attribute**
**498**

**Executable Contract Node**
**470**

**Contract Node**
**472**

**Node Mapping**
**478**

**Overlay Manager**
**474**

**Overlay**
**484**

**Attribute Mapping**
**480**

**Attributes**
**476**

**Attribute**
**486**

**Contract Behavior**
**482**

**FIGURE 4C**

**Run-Time Node**
502

**Node Instance**
506

**Node Template**
546

**Identifier**
550

**Version**
552

**Attribute Instance**
554

**Metadata**
556

**Node Type Instance**
548

**Node Template**
504

**Properties**
508

520  522  524  526  528  530

**Attribute Templates**
514

**Scopes**
544

**Metadata**
516

**Scope**
542

**Inheritance Identifiers**
510

532  534  536

**Node Configuration**
518

**Node Configuration Strategy**
538

**Node Configuration Extension**
540

**Node Type Template**
512

FIGURE 5A

EP 4 425 361 A1

**FIGURE 5B**

Executable Node Instance 560

Overlay Manager 574

Run-Time Overlay 576

580 ···· 578

Base Node Instance 572

566

Executable Node Template 558

Overlay Manager 564

Run-Time Overlay 566

570 ···· 568

Base Node Template 562

EP 4 425 361 A1

37

EP 4 425 361 A1

**Executable Run-Time Node**
581

**Overlay Manager**
584

**Run-Time Overlay**
586

590 ······ 588

**Base Run-Time Node**
582

**Node Instance**
506

**Node Template**
504

**FIGURE 5C**

**FIGURE 5D**

**FIGURE 6**

Rule
Overlay
710

702

Inference
Hyperedge
704

712    714

Value
Node
706

Value
Node
708

**FIGURE 7A**

**FIGURE 7B**

**FIGURE 7C**

**FIGURE 7D**

**FIGURE 8A**

834

**Inference Hypergraph Container**
836

802

**Contract**
844

**Shape Value**
840

**Psamm. Value**
842

**Grading Overlay**
846

**Grading Node**
838

**Seg. Overlay**
850

**Interface Overlay**
848

**FIGURE 8B**

900

**(902)**
IDENTIFY GRAPH-BASED MODEL

**(904)**
IDENTIFY AN EXECUTABLE INFERENCE
HYPERGRAPH

**(906)**
RECEIVE TRIGGER

**(908)**
EXECUTE EXECUTABLE INFERENCE
HYPERGRAPH

**(910)**
COMPARE WEIGHT VALUE TO
THRESHOLD CERTAINTY VALUE

**(912)**
OBTAIN AN ADDITIONAL TERM
WHEN WEIGHT VALUE DOES
NOT SATISFY THRESHOLD
CERTAINTY VALUE

**FIGURE 9**

1000

1002                                         1014

| (1008) ADDRESS BUS |                    | I/O | STORAGE | 1016 |

(1004)        (1006) MEMORY

NETWORK INTERFACE        1018

(1010) CONTROL BUS

INPUT CONTROLLER        1020

(1012) DATA BUS

OUTPUT CONTROLLER        1022

FIGURE 10

**EP 4 425 361 A1**

Europäisches Patentamt

European Patent Office

Office européen des brevets

# EUROPEAN SEARCH REPORT

Application Number

EP 24 16 0351

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/309179 A1 (PAYNE JOSHUA F [US] ET AL) 29 September 2022 (2022-09-29) | 1-6, 13-15 | INV. G06F21/62 |
| Y | * paragraphs [0078] - [0120]; figures 4b-11 * | 7-12 | G06F16/901 G06F16/21 G06N5/022 |
| Y | US 2022/210061 A1 (SIMU SERBAN [US] ET AL) 30 June 2022 (2022-06-30) * paragraphs [0063] - [0264] * | 1-15 | |
| Y | US 2021/306377 A1 (KUNDU ASHISH [US] ET AL) 30 September 2021 (2021-09-30) * paragraphs [0094] - [0100]; figures 4-7 * | 1-15 | |
| Y | SALVADOR AGUIÑAGA ET AL: "Growing Graphs from Hyperedge Replacement Graph Grammars", CONFERENCE ON INFORMATION AND KNOWLEDGE MANAGEMENT, ACM, 2 PENN PLAZA, SUITE 701 NEW YORK NY 10121-0701 USA, 24 October 2016 (2016-10-24), pages 469-478, XP058280846, DOI: 10.1145/2983323.2983826 ISBN: 978-1-4503-4073-1 | 7-9 | |
| A | * the whole document * | 1-6, 10-15 | TECHNICAL FIELDS SEARCHED (IPC) G06F G06N |
| A | US 2018/165416 A1 (SAXENA MANOJ [US] ET AL) 14 June 2018 (2018-06-14) * paragraphs [0077] - [0279] * | 1-15 | |

The present search report has been drawn up for all claims

| Place of search | Date of completion of the search | Examiner |
|---|---|---|
| Munich | 20 June 2024 | Widera, Sabine |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.............................................................................................

& : member of the same patent family, corresponding document

EPO FORM 1503 03.82 (P04C01)

47

**ANNEX TO THE EUROPEAN SEARCH REPORT
ON EUROPEAN PATENT APPLICATION NO.**                    EP 24 16 0351

This annex lists the patent family members relating to the patent documents cited in the above-mentioned European search report.
The members are as contained in the European Patent Office EDP file on
The European Patent Office is in no way liable for these particulars which are merely given for the purpose of information.

20-06-2024

| Patent document cited in search report | | Publication date | Patent family member(s) | | Publication date |
|---|---|---|---|---|---|
| US 2022309179 | A1 | 29-09-2022 | CN | 117063170 A | 14-11-2023 |
| | | | US | 2022309179 A1 | 29-09-2022 |
| US 2022210061 | A1 | 30-06-2022 | US | 2022210061 A1 | 30-06-2022 |
| | | | US | 2023318972 A1 | 05-10-2023 |
| US 2021306377 | A1 | 30-09-2021 | NONE | | |
| US 2018165416 | A1 | 14-06-2018 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63449241 A
- US 63448724 B
- US 63448722 B
- US 63448738 B